# EUROPEAN PATENT APPLICATION

(11) **EP 4 851 892 A1**
(43) Date of publication of application: **09.12.2026**
(21) Application number: 26181782.9
(22) Date of filing: 28.05.2026
(51) Int. Cl.: G06Q 10/10, G06Q 10/101

(54) **AI-BASED COLLABORATION CATCH-UP METHODS AND SYSTEMS**

(30) Priority: 06.06.2025 US 202519230692
(71) Applicant: Microsoft Technology Licensing, LLC, Redmond, WA 98052 (US)
(72) Inventor: NORDBERG, Sean Gary, Redmond, 98052 (US); SRIDHARAN, Hemaltha, Redmond, 98052 (US); ZHU, Zhenjun, Redmond, 98052 (US); GOEL, Anuj, Redmond, 98052 (US); KUMAR, Amit, Redmond, 98052 (US); FERNANDES GONSALVES, Mitchelle Rozarina, Redmond, 98052 (US); KALE, Tanvi Gajanan, Redmond, 98052 (US); JANARTHANAN, Divya, Redmond, 98052 (US); NA, Han, Redmond, 98052 (US); KARMY TACLA, Juan Antonio, Redmond, 98052 (US); HERZOG, Joseph Aloysious, Redmond, 98052 (US)
(74) Representative: CMS Cameron McKenna Nabarro Olswang LLP

(57) **Abstract**

A data processing system implements in response to a trigger, performing based on manifest information by a declarative agent: retrieving, via a plugin, versions of digital content items (DCTs) relevant to a user and associated with a time period, determining version difference data including DCT and comment changes made in the DCTs, condensing the versions or the version difference data to a condensed form, and constructing a prompt for a GenAI model to perform: (1) summarizing the comment changes across the DCTs, (2) ranking users making the DCT/comment changes, (3) summarizing per user the DCT/comment changes; (4) ranking the DCTs based on the comment changes, and/or (5) ranking comments and/or the comment changes based on an organization hierarchy of the users; applying the prompt to the GenAI to perform at least one of (1)-(5) processing and generate an output; and providing the output to a client device.

## Description

### BACKGROUND

Work catch-up processes are essential for workers returning after some time off, as it streamlines reintegration and minimizes the stress associated with information overload. Upon returning, workers often face a deluge of emails, missed updates, and shifting project priorities, which can hinder productivity and morale. Companies implement automated systems, such as centralized communication platforms, task management tools, and shared knowledge repositories, ensures that key updates, documents, and decisions made during the workers' absence are readily accessible. However, the workers must meticulously review files to integrate collaborative updates from others, such as content changes, graphic and table changes, @mentions, comments, and tasks, for each relevant file. Such repetitive, routine tasks are high-cost and low-yield, thereby diminishing worker productivity. There are some piecemeal efforts in improving the collaboration catch-up process. For example, some artificial intelligence (AI) tools help team members quickly understand what they missed during their absence, by generating document change summaries or meeting summaries, highlighting key points from long chat threads, or delivering personalized daily or weekly digests of project updates via a platform like Slack^{®}. Nevertheless, there is a need for a holistic and comprehensive collaboration catch-up system or method fully covering a user's collaborative digital content items and supports querying in natural language to drill down a desired level of granularity between any pair of arbitrary time points, thereby enabling the worker to resume responsibilities with proper priority and clarity.

### SUMMARY

An example data processing system according to the disclosure includes a processor and a machine-readable medium storing executable instructions. The instructions when executed cause the processor alone or in combination with other processors to perform operations including detecting a triggering criterion associated with a user and a pair of arbitrary time points; in response to the triggering criterion, performing based on manifest information by a declarative agent operations of: retrieving, via a plugin, versions of a plurality of digital content items relevant to the user and associated with the pair of arbitrary time points, determining version difference data including digital content item changes and comment changes made in the digital content items, condensing the versions of the digital content items or the version difference data from a current form to a condensed form, and constructing a prompt for a generative artificial intelligence (AI) model to perform at least one of: (1) summarizing the comment changes in the condensed form across the digital content items, per digital content item, or per user involvement type in a respective comment, (2) ranking users making the digital content item changes and the comment changes, (3) summarizing per user the digital content item changes and the comment changes made by each respective user; (4) ranking the digital content items based at least on the comment changes in the condensed form, and (5) ranking at least one of comments in the digital content items or the comment changes in the condensed form based on at least one of an organization hierarchy of the users, a timeline, or deadlines; applying the prompt to the generative AI model to perform the at least one of (1)-(5) processing, and generate an output including at least one of the ranked users, the summarized comments, the ranked digital content items, the ranked comments, or the ranked comment changes; providing the output to a client device associated with the user; and causing a user interface of the client device to display the output. The manifest information specifying a configuration of the declarative agent with required fields and capabilities corresponding to the (1)-(5) processing, and a configuration of the plugin with required fields and capabilities corresponding to retrieving the versions.

An example method implemented in a data processing system includes detecting a triggering criterion associated with a user and a pair of arbitrary time points; in response to the triggering criterion, performing based on manifest information by a declarative agent operations of: retrieving, via a plugin, versions of a plurality of digital content items relevant to the user and associated with the pair of arbitrary time points, determining version difference data including digital content item changes and comment changes made in the digital content items, condensing the versions of the digital content items or the version difference data from a current form to a condensed form, and constructing a prompt for a generative artificial intelligence (AI) model to perform at least one of: (1) summarizing the comment changes in the condensed form across the digital content items, per digital content item, or per user involvement type in a respective comment, (2) ranking users making the digital content item changes and the comment changes, (3) summarizing per user the digital content item changes and the comment changes made by each respective user; (4) ranking the digital content items based at least on the comment changes in the condensed form, and (5) ranking at least one of comments in the digital content items or the comment changes in the condensed form based on at least one of an organization hierarchy of the users, a timeline, or deadlines; applying the prompt to the generative AI model to perform the at least one of (1)-(5) processing, and generate an output including at least one of the ranked users, the summarized comments, the ranked digital content items, the ranked comments, or the ranked comment changes; providing the output to a client device associated with the user; and causing a user interface of the client device to display the output. The manifest information specifying a configuration of the declarative agent with required fields and capabilities corresponding to the (1)-(5) processing, and a configuration of the plugin with required fields and capabilities corresponding to retrieving the versions.

An example non-transitory computer readable medium according to the disclosure on which are stored instructions that, when executed, cause a programmable device to perform functions of detecting a triggering criterion associated with a user and a pair of arbitrary time points; in response to the triggering criterion, performing based on manifest information by a declarative agent operations of: retrieving, via a plugin, versions of a plurality of digital content items relevant to the user and associated with the pair of arbitrary time points, determining version difference data including digital content item changes and comment changes made in the digital content items, condensing the versions of the digital content items or the version difference data from a current form to a condensed form, and constructing a prompt for a generative artificial intelligence (AI) model to perform at least one of: (1) summarizing the comment changes in the condensed form across the digital content items, per digital content item, or per user involvement type in a respective comment, (2) ranking users making the digital content item changes and the comment changes, (3) summarizing per user the digital content item changes and the comment changes made by each respective user; (4) ranking the digital content items based at least on the comment changes in the condensed form, and (5) ranking at least one of comments in the digital content items or the comment changes in the condensed form based on at least one of an organization hierarchy of the users, a timeline, or deadlines; applying the prompt to the generative AI model to perform the at least one of (1)-(5) processing, and generate an output including at least one of the ranked users, the summarized comments, the ranked digital content items, the ranked comments, or the ranked comment changes; providing the output to a client device associated with the user; and causing a user interface of the client device to display the output. The manifest information specifying a configuration of the declarative agent with required fields and capabilities corresponding to the (1)-(5) processing, and a configuration of the plugin with required fields and capabilities corresponding to retrieving the versions.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The drawing figures depict one or more implementations in accord with the present teachings, by way of example only, not by way of limitation. In the figures, like reference numerals refer to the same or similar elements. Furthermore, it should be understood that the drawings are not necessarily to scale.
FIGS. 1A-1B are diagrams of an example computing environment in which the techniques for providing AI-based collaboration catch-ups are implemented.
FIGS. 2A-2D are conceptual diagrams of generating AI-based collaboration catch-ups for files relevant to a user of the system of FIGS. 1A-1B.
FIGS. 3A-3C are example user interfaces of a collaboration catch-up approach that implements the techniques described herein.
FIG. 4 is a flow chart of an example process for generating AI-based collaboration catch-ups for files relevant to a user according to the techniques disclosed herein.
FIG. 5 is a block diagram showing an example software architecture, various portions of which may be used in conjunction with various hardware architectures herein described, which may implement any of the described features.
FIG. 6 is a block diagram showing components of an example machine configured to read instructions from a machine-readable medium and perform any of the features described herein.

### DETAILED DESCRIPTION

Work catch-up automation is necessary because modern teams operate in highly dynamic, information-rich environments where updates happen constantly across multiple tools and channels. Work catch-up automation is especially important for collaborative documents because these files often undergo frequent, incremental changes by multiple contributors, making it difficult to track what's new or significant. Especially, manually catching up after a short absence can be overwhelming, time-consuming, and prone to missing critical context or decisions. Currently, users meticulously review files to integrate collaborative updates from others across different file types and communication channels, such as content changes, @mentions, comments, tasks, and the like, for each pertinent file, since existing AI tools offers piecemeal solutions. Such repetitive, routine user efforts are high-cost and low-yield, diminishing user productivity.

For example, some AI tools (e.g., Otter.ai, Fireflies.ai) automatically record and transcribe meetings, then generate summaries with action items and speaker highlights. Absent team members can review what was discussed and decided without watching the full recording. Tools like Slack's AI can summarize long message threads or channels, highlighting decisions, key points, and unresolved questions so that returning teammates don't have to read every message. Tools like Motion AI can also generate productivity digests by summarizing task progress, project changes, and upcoming priorities based on worker role and recent interactions. However, these tools do not offer a holistic and comprehensive collaboration catch-up that fully covers a user's collaborative digital content items and supports asking natural language questions to drill down a desired level of granularity (e.g., document, comment, task, and the like).

To address these technical issues and more, in one example, the system provides an AI-based catch-up approach for a user's collaborative digital content items by summarizing document changes and comment changes, ranking documents based at least one the comment changes, and flagging highly ranked documents and/or respective comment changes, thereby allowing team members to quickly get up to speed and maintain alignment, as well as ensuring smoother collaboration, faster decision-making, and fewer misunderstandings. By summarizing changes, prioritizing what's important, and presenting the content in a clear, digestible format, the system helps the user to quickly gain work situational awareness, and return to productive work without wasting time or relying on others to fill the user in.

In one implementation, the automated system for tracking and reporting document and comment changes uses generative AI (e.g., LLM), by automatically searching for documents relevant to a user (e.g., from an automated periodic process, user initiation, or in response to changes), comparing document versions between a pair of arbitrary time points to determine changes, collecting comments and edits, summarizing/ranking comments and edits, and other activities. The system determines the user who makes the comments/edits/activity and makes query in a graph database of user to determine the user's organization hierarchy. The system does that for all documents with comments/edits/activity, and prioritizes/ranks these for displaying to the user.

In this manner, the technical solution described herein addresses the technical problem of lack of mechanisms to deliver summarized and ranked content/comment changes in a plurality of files relevant to one user in a meaningful "intelligent" way. The solution further extends the user experience where users can ask an AI agent for more scoped summaries based on specific time, author or co-authors, scoped topic or portion of a file, certain comments, and the like. The plurality of files relevant to the user includes files shared with user, files mentioning the user in comments, tasks assigned to the user, files the user shared with others that have recent changes, and files from other applications referenced in the above-mentioned files, and the like.

A technical benefit of the collaboration catch-up approach provided herein is the file/comment summaries generated and ranked by a generative AI model being more comprehensive and accurately representing the user priority and preferences, thereby improving the productivity of the user. Displaying document summaries ranked based on pending important comments (e.g., @mentioned, tasks, etc.), recency, an organization chart, change magnitudes of the documents/discussion threads/comments, and the like, on a single screen offers significant benefits for productivity and project management. After selecting one file, the comment summaries ranked based on user relevancy/impotence provides a clear, organized overview of what needs to be done, helping the user to prioritize effectively and avoid overlooking critical tasks. This visibility supports better time management, facilitates quick status updates, and enhances collaboration with others regarding aligned responsibilities and deadlines. Centralizing catch-up information also reduces the need to switch between multiple tools or documents, streamlining workflows and enabling faster decision-making.

Another technical benefit of this approach is to convert complex file formats like Open Extensible Markup Language (OXML) to a simpler intermediate representation (IR) which significantly saves time and resources in processing, analysis, or transformation tasks, such as generating Diff data, summarizing the Diff data, and ranking the documents/comments based on the Diff data, and the like. Simplified formats reduce parsing complexity, minimize dependencies, and improve performance by eliminating unnecessary metadata and structural overhead. Additionally, using a uniform IR across different input formats enables more efficient data processing pipelines and fosters reuse of tools and components.

Another technical benefit of this approach is to preserve the non-text element and one or more properties of the non-text element in the IR, when the non-text element and/or the one or more properties was changed between the versions. As such, the approach can capture the non-text element changes and/or the one or more properties changes, thereby enriching the IR diff conversion without overly-burdening the IR conversion process.

Another technical benefit of this approach is to use a shredder service to fetch specific versions of a document with sensitivity labels thereby access decrypted document versions while maintaining a security, compliance, and precision in document management. It ensures that only the intended, authorized versions of a document are accessed, reducing the risk of data leaks or unauthorized disclosure of sensitive information. This capability also supports auditing and traceability by keeping a clear record of which version was accessed, when, and by whom. Overall, it streamlines secure content retrieval and helps maintain data integrity across document lifecycles.

Yet another technical benefit of this approach is to generate version difference data for spreadsheet files, by retrieving a latest file and revision-log stream data of the spreadsheet, then extracting Diff data of the spreadsheet based on the latest file and the revision-log stream data. These and other technical benefits of the techniques disclosed herein will be evident from the discussion of the example implementations that follow.

As used herein, the term "catch-up" refers to keeping track of content and comment changes of a user's digital content items (e.g., a document, a spreadsheet, a presentation, a form, a diagram, a note, a website, an email, a group chat, a collaboration channel chat, an audio meeting, a video meeting, a calendar, a database, a whiteboard, and the like). It shows the user what has been going on in the digital content items during two arbitrary time points (e.g., since the user last visited the document). The terms "catch-up", "follow", and "subscribe" all relate to tracking digital content item changes, but they imply different levels of engagement and mechanics. "Catch-up" is for the user reviewing changes after the fact. "Follow" is for real-time user collaboration. "Subscribe" is used when the user wants to be notified asynchronously about updates.

The term "comment" refers to a user-added note or annotation associated with a part of the document content, often used for feedback or editing purposes.

The term "entity" refers to a legal entity that is recognized by law and has certain rights and responsibilities, such as enterprises, non-profit organizations, government agencies, or the like. The term "organization" refers to a specific type of entity that is structured and has a purpose, such as institutes (e.g., an educational institute or non-profit organization), business, or other organized body of a people with a particular purpose. The term "enterprise" refers to business organization.

Although various embodiments are described with respect to work collaboration catch-up, it is contemplated that the approach described herein may be used with other catch-ups, such as an individual, a family, a school class, a non-profit group (e.g., volunteers), and the like.

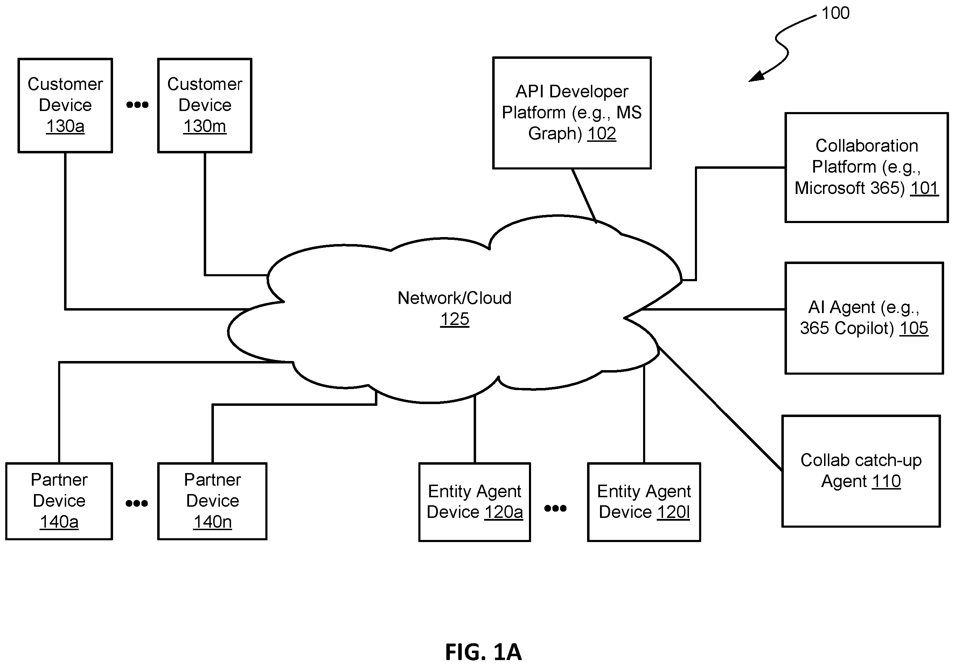

FIG. 1A is a block diagram illustrating an example of a computing environment 100. The computing environment 100 includes a collaboration platform 101 (e.g., Microsoft 365^{®}), an API developer platform (e.g., MS Graph) 102, an AI Agent (e.g., Copilot^{®}) 105, a collaboration catch-up agent ("collab catch-up agent") 110, a network 125 (e.g., including a cloud), as well as entity agent devices 120a-120l (also collectively referred to as entity agent devices 120), customer devices 130a-130m (also collectively referred to as customer devices 130), and partner devices 140a-140n (also collectively referred to as partner devices 140). In some examples, all elements of the computing environment 100 reside at on-premises or cloud-based infrastructure and connect to the network 125. The devices 120, 130, 140 can be desktops, laptops, smart phones, and the like. Copilot^{®} is a broader AI assistant, embedded directly into host applications, helping users write, analyze, and automate tasks using both GPT-4 and organizational data.

Work collaboration across different groups, within the enterprise, with partners, corporate customers, and end users, drives innovation, alignment, and efficiency. Internally, it enhances productivity by breaking down silos, enabling cross-functional teams to share knowledge and solve problems faster. Collaborating with partners, such as in joint research or sales initiatives, expands market reach and accelerates product development through shared expertise and resources. With corporate customers, collaboration ensures solutions are tailored to real business needs, fostering long-term relationships and mutual growth. Involving end users brings valuable feedback directly into the development cycle, leading to more user-centric products and higher satisfaction. Together, the interconnected collaboration among devices 120, 130, 140 boosts agility, competitiveness, and value creation.

The hardware for implementing the collab catch-up agent 110 depends on several factors, such as the type of ML/generative models to use, whether using an on-premises or cloud-based infrastructure, and the like. The collaboration catch-up approach can use one or more computing devices to run the collaboration platform 101 and the collab catch-up agent 110, one or more data storages to store digital content item data (e.g., content data, metadata, etc.), tasks, templates, AI-driven functions, code-driven functions, AI-generated logics, document/comment summary output(s) of digital content items relevant to a user, and a reliable network (e.g., the network 125) to connect the one or more computing devices and the one or more storages. In one embodiment, the hardware for implementing the collab catch-up agent 110 stands alone. In another embodiment, the hardware for implementing the collab catch-up agent 110 is embodied in an existing system, such as the collaboration platform 101 or the AI Agent 105.

The computing devices may include virtually any type of general- or specific-purpose computing devices with data processing units. For example, a computing device may be a user device such as a desktop computer, a laptop computer, a tablet computer, a display device, a camera, a printer, or a smartphone. Likewise, a computing device may also be a server device such as an application server computer, a virtual computing host computer, or a file server computer. Likewise, the computing device may be an example of any of the devices, a device within any of the distributed systems, illustrated in or referred to in any of the following figures, as discussed in greater detail below.

FIG. 1A and the corresponding description of FIG. 1A in this disclosure illustrate an example system for illustrative purposes and does not limit the scope of the disclosure. The collaboration platform 101, and the collab catch-up agent 110 may each be a part of one or more distributed systems.

The collaboration platform 101 supports comprehensive, cloud-based productivity applications and services, including word processing, spreadsheets, email, video meetings, cloud-based storage, content management, document storage, intranet development, and workflow automation, designed to facilitate communication, collaboration, and productivity across organizations. The collaboration platform 101 enables organizations to create a cohesive digital workspace that supports both broad productivity needs and specific content management requirements.

The API developer platform 102, like Microsoft Graph, provides a unified, RESTful endpoint that enables developers to access and integrate data across services of the collaboration platform 101, including email, video meetings, cloud-based storage, content management, document storage, intranet development, workflow automation, accessing a cloud computing platform (e.g., Azure^{®}), and the like. By offering a single API surface, the API developer platform 102 simplifies the process of building applications that interact with a user's organizational data, such as emails, calendars, contacts, files, and user profiles. It supports both real-time operations and large-scale data analysis through tools, and allows developers to extend experiences of the collaboration platform 101 by bringing in external data via connectors. With software development kits (SDKs), REST APIs, and integration with the cloud computing platform, it empowers developers to build intelligent, context-aware applications that enhance productivity and collaboration across devices and platforms.

The AI Agent 105, like Microsoft 365 Copilot, is an intelligent assistant embedded within applications-such as word processing, spreadsheets, email, video meetings, cloud-based storage, content management, and the like, that leverages large language models and organizational data to enhance productivity. When integrating with the API developer platform 102, the AI Agent 105 accesses emails, calendars, documents, chats, and the like to provide context-aware assistance, enabling users to draft content, summarize meetings, analyze data, and automate repetitive tasks directly within their workflow. Additionally, organizations can create custom AI agents, such as the collab catch-up agent 110, tailoring them to specific business processes and integrating them into familiar applications and/or tools. These agents operate securely within enterprise environments, adhering to compliance standards and privacy policies, thereby transforming the way individuals and teams collaborate and manage information.

The collab catch-up agent 110 implements the collaboration catch-up approach. The general AI agent 105 is designed to perform a wide range of tasks across different domains without being tailored to any specific use case, making it versatile but less optimized for specialized functions. In contrast, the collab catch-up agent 110 is specifically developed and fine-tuned for the collaboration catch-up approach, enabling it to deliver higher accuracy, efficiency, and relevance within that targeted collaboration catch-up context. While the general AI agent 105 offers broad usability and adaptability, the collab catch-up agent 110 excels in performance and outcomes when dealing with collaboration catch-up-specific challenges.

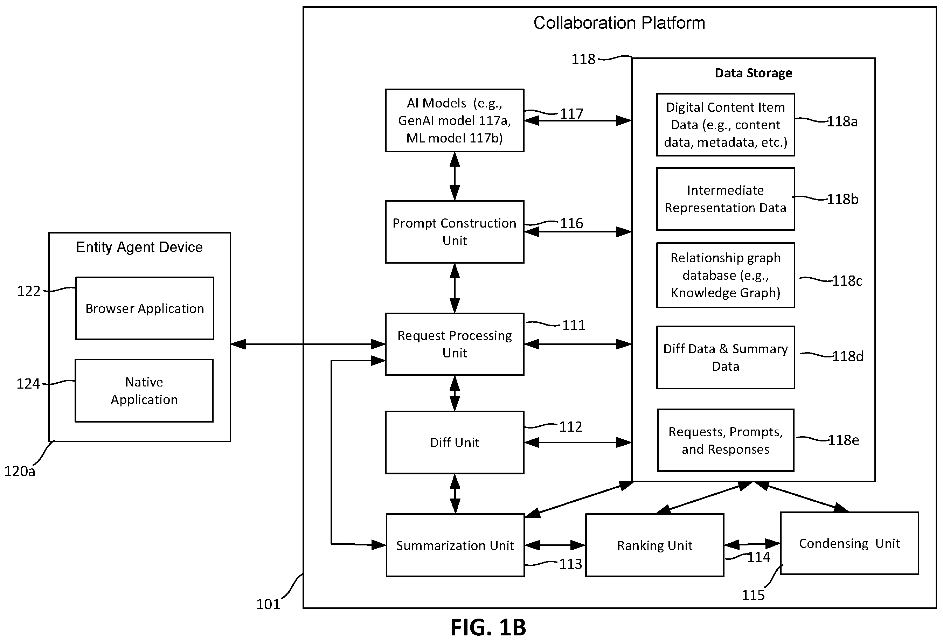

The example implementation illustrated in FIG. 1B includes a single entity agent device 120a that utilizes services provided by the collab catch-up agent 110. By analogy, any of the customer devices 130 and the partner devices 140 with respective access authorizations can access the collab catch-up agent 110 for various functions.

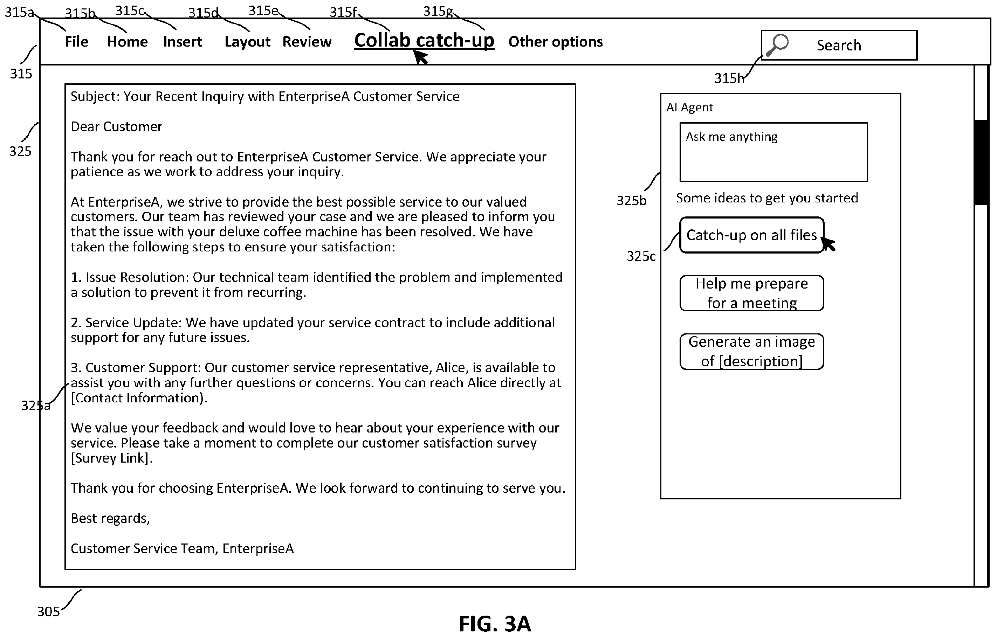

The entity agent device 120a includes a native application 124 and a browser application 122. The native application 124 is a web-enabled native application, in some implementations, which enables AI-based collaboration catch-up. The web-enabled native application utilizes services provided by the collab catch-up agent 110 including but not limited to summarizing and/or ranking various types of collaborative digital content item changes and comment changes in digital content items relevant to a user. The native application 124 implements a user interface 305 shown in FIGS. 3A-3B in some implementations. In other implementations, the browser application 122 is used for accessing and viewing web-based content provided by the collab catch-up agent 110. In such implementations, the collab catch-up agent 110 utilizes one or more web applications, such as the browser application 122, that enables users to summarize and/or rank various types of collaborative digital content item changes and comment changes for a user using, for example, an online application. The browser application 122 implements the user interface 305 shown in FIGS. 3A-3B in some implementations. The collab catch-up agent 110 supports both the native application 124 and the browser application 122 in some implementations, and the users may choose which approach best suits their needs.

The collaboration platform 101 includes a request processing unit 111, a diff unit 112, a summarization unit 113, a ranking unit 114, a condensing unit 115, a prompt construction unit 116, AI models 117 (including a generative AI model 117a, a machine learning model 117b, and the like), and a data storage 118. The request processing unit 111 is configured to receive requests from the native application 124 and/or the browser application 122 of the entity agent device 120a. The requests may include but are not limited to requests to summarize and/or rank various types of collaborative digital content item changes and comment changes according to the techniques provided herein.

The request processing unit 111 is configured to receive requests from the native application 124 and/or the browser application 122 of the entity agent device 120a. The request processing unit 111 can check enterprise data (including enterprise employee data) or user-specific data for the user credentials before grating access to the collaboration platform 101. The requests may include but are not limited to requests to create, view, and/or modify content of interest (e.g., letters, resumes, summaries, translation, reports, articles, stories, blog posts, emails, movie scripts, image, music, video in various styles, video games, code snippets, and the like), and/or to generate collab catch-up for user-relevant documents. The request processing unit 111 also coordinates communication and exchange of data among components of the collaboration platform 101 as discussed in the examples which follow.

The diff unit 112 works in conjunction with the collab catch-up agent 110 to generate version difference data ("Diff") of the document versions by scoping Diff based on ID match, labeling each diff as added/updated/removed, and keeping old and new values. The summarization unit 113 works in conjunction with the LLM 105a-1 to summarize the Diff data per at different levels of granularity (e.g., document, comment, task, and the like). The ranking unit 114 ranks documents, comments, tasks, and the like based on criteria indicating relevancy/importance to the user. The condensing unit 115 condenses the digital content items from a current form to a condensed form. For example, the condensing unit 115 converts the document and/or diff data form OXML to a simpler/condensed format, such as the IR format, to reduce processing time. Using an XML parser or a document processing library (e.g., python-docx in Python or Open XML SDK in .NET), the condensing unit 115 extracts and interprets the document's structure and formatting. This information is then mapped to a structured IR format, typically a JSON-like model, that abstracts document elements such as headings, paragraphs, tables, and lists, along with their styling and semantic meaning. The goal is to represent the content in a consistent, language-agnostic way that supports further analysis, transformation, or rendering across platforms.

The prompt construction unit 116 is responsible for creating and refining prompts to interact effectively with the AI models 117. This involves designing input instructions that guide the AI models 117 to produce accurate and contextually relevant outputs. The key tasks of the prompt construction unit 116 in the collab catch-up approach include constructing prompts to the AI models 117 (e.g., a LLM 117a-1) to summarize and rank the Diff data into content summary data to present to the user. Examples of such models include but are not limited to Generative Pre-trained Transformer 4 (GPT-4), Claude^{®}, BERT^{®} (Bidirectional Encoder Representations from Transformers), Falcon 40B^{®}, Gemini^{®}, CodeWhisperer^{®}, and the like. Other implementations may fine-tune other generative AI models for tasks according to the AI-based privacy-preserving synthetic data generation. The prompts are saved in the data storage 118 as a part of requests, prompts, and responses 118e.

The AI model(s) 117 include a generative AI model 117a, a machine learning model 117b, and the like. The collab catch-up agent 110 applies the generative model 117a (e.g., a LLM 117a-1) and the machine learning model 117b for different tasks. The collab catch-up agent 110 uses a machine learning model for quantitative business data analysis, such as determining customer product/service usage data, predicting future sales, customer churn, product demand, segmenting customers into different groups/segments based on behaviors, identifying factors influencing sales, or the like. Machine learning offers a broad range of analysis techniques such as classification algorithms to segment customers, regression models to forecast sales, clustering algorithms to identify groups with similar characteristics, and the like. Machine learning typically requires training. Machine learning models are easier to interpret than generative models, to understand the reasoning behind the results. In one embodiment, the collab catch-up agent 110 calls a generative AI model to summarize comment changes across the user's digital content items. In some implementations, the collab catch-up agent 110 uses a combination of generative and ML models.

The data storage 118 stores digital content item data 118a (e.g., content data, metadata, etc.), intermediate representation data 118b, a relationship graph database 118c (including knowledge graphs), diff data and summary data 118d, and the requests, prompts, and responses 118e created/processed/modified by the diff unit 112, the summarization unit 113, and the ranking unit 114 as explained below. By tapping into this structured knowledge base, the AI agent 105 enhances productivity by enabling users to quickly access and interact with organizational knowledge through natural language queries, helping streamline tasks, decision-making, and collaboration.

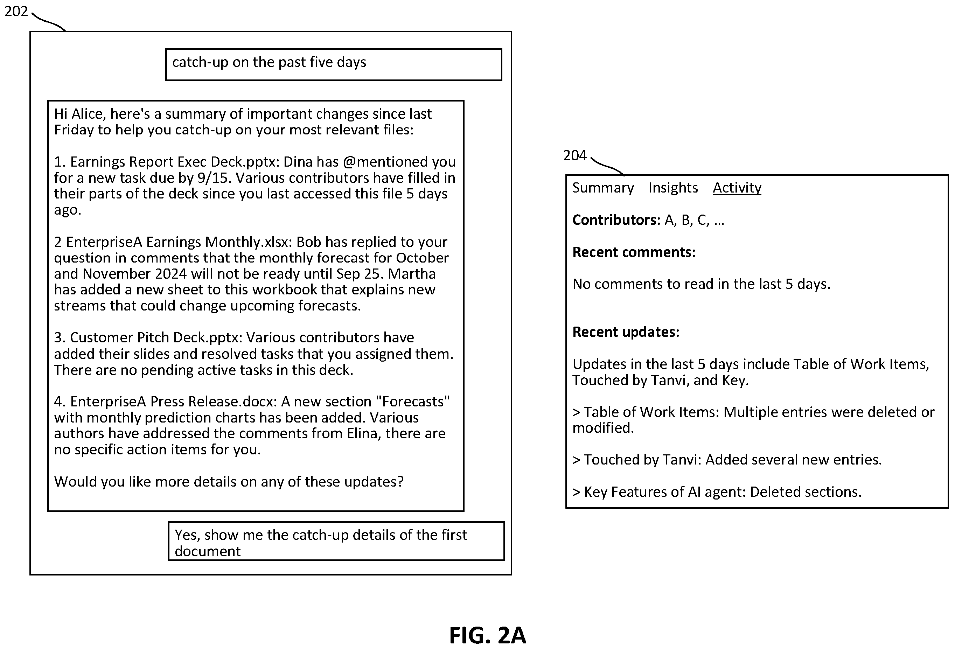

FIGS. 2A-2D are conceptual diagrams of AI-based collaboration catch-up system of FIGS. 1A-1B. FIG. 2A illustrates a user-oriented collaboration catch-up example output by the collab catch-up agent 110 for illustrative purposes that do not limit the scope of the disclosure. In a chat box 202, the user asks the collab catch-up agent 110 to "catch-up on the past five days." For example, the collab catch-up agent 110 extracts user-relevant files from the digital content item data 118a of the data storage 118, groups document changes per file, prioritizes the files by action items for the user Alice, double sorts the files by due date, then list: File name, @mentioned the user (e.g., in a reply to comment, to assign a task in a comment, and the like), a change summary from document changes made by others, and comment threads, made in the past five days. Four files were ranked and listed in the chat box 202 in FIG. 2A. In this case, Alice can direct her attention to the most important work items, such as the first document.

Once the change summaries per file are collected in a structured table, the collaboration catch-up approach ranks and prioritizes comments and tasks from a selected document for the user as a personalized relevant catch-up experience. The goal is to design an action-focused review feed for collaborative documents relevant to the user. The collaboration catch-up approach includes grouping, prioritization, sorting, and linking changes.

For example, in response to Alice's request for the catch-up details of the first document, the collab catch-up agent 110 opens a window 204 to display the main contributors of the document changes and/or the comment changes, recent comments and their summary, and recent updates and their summary. The first document was summarized as: "Earnings Report Exec Deck.pptx: Dina has @mentioned you for a new task due by 9/15. Various contributors have filled in their parts of the deck since you last accessed this file 5 days ago." In the window 204, since there are no comments to read in the last 5 days, there is no comment listed under "Recent comments" or their summary. There are three items under "recent updates" and their summary of "updates in the last 5 days include Table of Work Items, Touched by Tanvi, and Key."

Specifically, the collaboration catch-up approach determines changes of document updates, metadata changes, comments and tasks during the past 5 days, extracts RSID/para level metadata for authors, timestamps, mentions, due dates, section tags, and the like. The collaboration catch-up approach ranks the documents for personalized relevance scoring based on topical relevance (keyword/embedding), author importance, task urgency, @mentions/ownership, and the like. The collaboration catch-up approach groups document/comment changes by file, then by section, sorts documents/comments by due date/urgency/priority, then by relevance, and then formatted entries with deep links, such as "Tasks for You", Filters, Highlights, and the like.

When a comment is saved in a document file, it is typically embedded within the file's data structure using a specific format defined by the document type (e.g., DOCX, PDF). In formats like DOCX (Microsoft Word^{®}), comments are stored in a separate part of the file package, usually in an XML structure that links the comment to a specific location in the text via an identifier. For example, a comment with elements in XML is listed in Table 1.

**Table 1**

| |
|---|
| comment = { |
| "id": "c123", |
| "text": "This section might need rephrasing", |
| "author": "alice", |
| "timestamp": "2025-05-01T10:00:00Z", |
| "task_type": "suggestion", # or "blocking", "question", etc. |
| "mentions": ["bob"], |
| "section": "introduction", |
| "priority_label": "medium" |
| } |

Using @user in a comment is a way to tag or notify someone, typically to draw their attention to a discussion or piece of information. While it can be used to assign tasks or request input, it also serves broader purposes such as keeping someone in the loop, attributing credit, referencing their previous work or decisions, or creating a record for accountability. The mention doesn't always imply action is needed. It can be informational, contextual, or a subtle nudge to prompt awareness or optional feedback.

On the other hand, a file dictionary (as listed in Table 2) is a metadata structure that contains information about the entire document, such as title, author, creation date, and references to objects within the file. While comments are content-specific and user-visible, file dictionaries are part of the document's internal architecture used by software to manage and render the file.

**Table 2**

| |
|---|
| { |
| "file name": "Product Strategy Plan", |
| "items": [ |
| { |
| "section": "Goals", |
| "mentioned_you": true, |
| "assigned_to_you": true, |
| "change_summary": "Updated product timeline for Q3 with 3-week delay.", |
| "comment_summary": "@you Is this delay OK? → You replied: 'Confirmed' → |
| @carol resolved.", |
| "due_date": "2025-05-06", |
| "score": 12.5, |
| "deep_link": "link" |
| }, |
| { |
| "section": "Intro", |
| "mentioned_you": false, |
| "assigned_to_you": false, |
| "change_summary": "Reworded intro paragraph for tone.", |
| "comment_summary": "Peer suggestion: 'Consider softening the phrasing.'", |
| "due_date": null, |
| "score": 3.1, |
| "deep_link": "link" |
| } |
| ] |
| } |

In one implementation, within a file's change summary, the collaboration catch-up approach first sorts by due date or urgency (e.g., blocking > high > medium > low), and then sorts by a personalized relevance score (e.g., based on a scoring model). The scoring model gives top priority to: (1) comments and tasks that @ mention the user, (2) high-profile action items based on who has requested information - management chain, close collaborators, etc., (3) responses to the user's prior comments/questions, (4) follow-up/action items tasks for the user, (5) tasks with due dates that are active or have been completed recently, and (6) changes in sections that are relevant to the user or last edited by user.

Each change entry is tagged with metadata to support ranking, with following key attributes: (1) content relevance to the user (e.g., based on topic or keywords), (2) author (e.g. team lead, peer, self), (3) priority label (if available), (4) timestamp or age, (5) number of replies or upvotes, (6) explicit mentions (e.g., @user), and (7) document section relevance (e.g., if the user is "assigned" that section).

For each collaborator, the collaboration catch-up approach additionally defines a profile as listed in Table 3: role (e.g., author, reviewer, PM, engineer), section ownership or contribution, comment history (comments the user made or replied to), and recent activity (what the user recently viewed or interacted with).

**Table 3**

| |
|---|
| user = { |
| "name": "bob", |
| "role": "editor", |
| "owned_sections": ["introduction", "summary"], |
| "important_authors": ["alice", "carol"], |
| "recent_keywords": ["clarity", "tone"], |
| } |

FIG. 2A shows content relevant to the user as catch-up by way of example only, not by way of limitation. Other content elements can be added and/or removed in presentations different from FIG. 2A. Examples of content relevant to the user include comments where the user is directly mentioned, replies to a discussion where the user commented, comment summaries, prioritization by person who left the comment (e.g., managers or higher ups vs. people I regularly collaborate with in Teams or meetings), prioritization comments where a timeline or deadline is present, content changes of other objects (e.g., tables, images, etc.), users made the change, format and structure changes, tasks assigned to the user, and the like. For example, changes to summarize can include changes in terms of: percentage of edits in the file, number of people who edited, and the like, changes grouped by activity type, changes grouped by people that made changes, changes in a timeline view, and the like. The user can interact with the AI agent 105 to configure to view (how output is categorized, etc.) different form FIG. 2A. For example, the user enters "I want to see catch-up changes based on my role as an author or contributor."

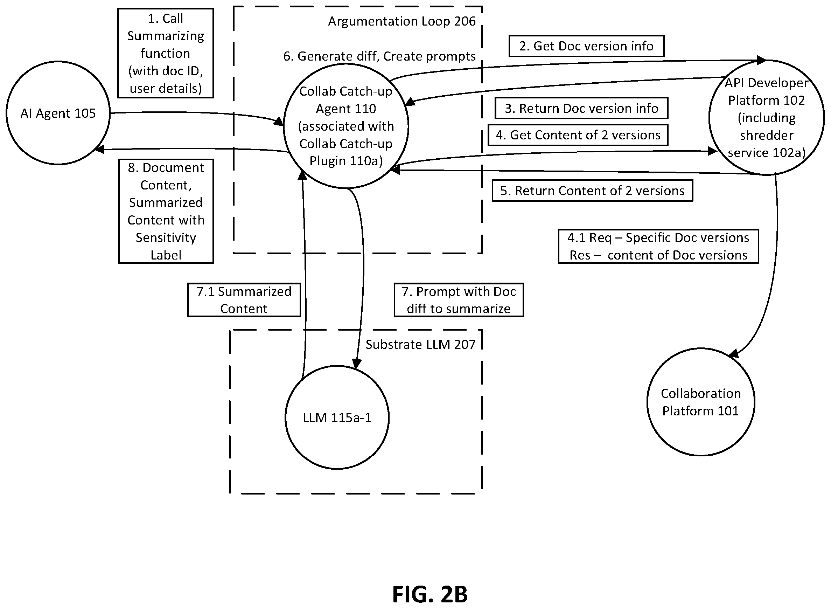

FIG. 2B is a workflow diagram of the collaboration catch-up approach that leverages the power of the LLM 117a-1 to build an automation that catches up with relevant documents of a user, whether automatically or through user-initiation. The goal is to deliver a customized, actionable and prioritized summary of document/comment changes therein within any two arbitrary time points.

This workflow performs in steps: 1. Get a specific input file or discover user-relevant files. 2. Fetch Version info from the API developer platform 102. 3. Select two candidate versions of the file. 4. Fetch the full files of the versions from a file host. 5. Parse each version of the file as OXML. 6. Differentiate the two versions to generate content (document/comment) changes. 7. Execute an LLM prompt to summarize the changes. 8. Return the summary of the changes to the user.

Step 1: Get specific input files relevant to the user (e.g., user selected or from App-Copilot context), or discover the relevant files. In this case, the AI agent 105 calls a summarizing or catch-up function together with data of doc IDs, user details, and the like via an argumentation loop 206. The argumentation loop 206 matches the call with the collaboration catch-up plugin 110a that is associated with the collab catch-up agent 110 among the plugins in a plugin repository. The argumentation loop 206 is a structured process where AI agents (or components within a system) exchange arguments, counterarguments, and evaluate reasoning in an iterative manner until a conclusion or decision is reached.

In one implementation, the collab catch-up agent 110 is a declarative agent. The core elements of a declarative agent application package include (1) an app manifest describing how the app is configured, including its capabilities, required resources, and other important attributes, (2) an app icon for the declarative agent, (3) declarative agent manifest describing how the declarative agent is configured, including its required fields, capabilities, conversation starters, and actions, and (4) plugin manifest describing how the collaboration catch-up plugin 110a is configured, including its required fields and capabilities. The collaboration catch-up plugin 110a enables the collab catch-up agent 110 to interact with the API developer platform 102 (e.g., MS Graph) that connects multiple services and applications, thereby accessing user-relevant files across services of the collaboration platform 101, including email, video meetings, cloud storage, content management, document storage, intranet development, workflow automation, accessing a cloud computing platform (e.g., Azure^{®}), and the like.

The collaboration catch-up plugin 110a includes two major components: (1) The reasoning and responding prompts (see Table 4) that provide an orchestrator of the argumentation loop 206 with descriptions and instructions on when and how to invoke a particular plugin. (2) Manifest.json that includes information about the plugin owner and the function (e.g., the workflow in FIG. 2B) to be executed. It is sufficient to send only an itemized list of changes to the LLM 117a-1 (with context) to properly summarize the changes. The collaboration catch-up plugin 110a instructs the LLM 117a-1 with specific rules (e.g., grouping nearby style changes and using section name to summarize at business level) to ensure it produces an accurate, relevant and meaningful output.

**Table 4**

| |
|---|
| Is the user asking to show recent changes to a document or catch-up with the recent changes to a document? If so, I must always invoke collab_copilot_catch-up(documentUrl: str, lookbackWindow: str) -> str passing the document url. |
| When I invoke collab_copilot_catch-up(documentUrl: str, lookbackWindow: str) -> str, I must provide values for every required parameter in all circumstances. I must adhere to the following guidelines for the method parameters: * documentUrl(string, required): is a |
| string that contains the url of the document the user wants to catch-up recent changes. |
| * lookbackWindow(string, required): is a lookback time frame that the user wants to check on the document. If the query includes a time frame, e.g., 12 hours, 1 day, 3 days, 2 weeks, make sure to add it to the lookbackWindow. |
| Respond to user with summary of the file changes produced as part of the output of this tool. |
| I MUST NOT modify or change the response I obtained from the output of this tool and render the verbatim output to the user |

Step 2: The collab catch-up agent 110 fetches user-relevant file version information from the API developer platform 102. To simplify the discussion, one file is processed as an example. In reality, the workflow can process a plurality of user-relevant files of different file formats in parallel. Step 3: Based on the fetched user-relevant file version information, the collab catch-up agent 110 selects two candidate versions of the file corresponding to the two arbitrary time points.

Step 4: The collab catch-up agent 110 fetches the full file of each of the two candidate versions form the API developer platform 102. Step 4.1: The API developer platform 102 in turn requests the two candidate versions from a host (e.g., the collaboration platform 101), and the host responds with the two candidate versions.

Although work collaboration within the enterprise, with partners, corporate customers, and end users, drives innovation, alignment, and efficiency, it also introduces significant data security and privacy challenges. Within the enterprise, sensitive information must be protected across departments, often requiring strict access controls and monitoring to prevent internal breaches. Collaborating with partners, especially in joint research or sales, risks exposing proprietary data or intellectual property, making secure data sharing and contractual safeguards essential. With corporate customers, handling confidential business data demands compliance with strict privacy regulations and industry standards. Engaging end users raises concerns about the collection, storage, and use of personal data, requiring transparent practices and robust consent mechanisms. Across all levels, the challenge lies in enabling seamless collaboration without compromising data integrity, confidentiality, or regulatory compliance.

For data security and privacy during work collaboration, a comprehensive, multilayered approach is provided as grounded in industry-leading compliance, transparency, and built-in protections. Within the enterprise, the collaboration platform 101 works in conjunction with a cloud computing platform (e.g., Azure^{®}) to provide advanced security features like role-based access control, data loss prevention, and encryption by default to safeguard internal communications and documents. For partner collaboration, tools such as video conferencing applications and a cloud document storage offer secure external sharing capabilities, conditional access policies, and auditing to control and track information exchange. When working with corporate customers, the collaboration platform 101 ensures compliance with global standards such as the General Data Protection Regulation (GDPR), ISO 27001, and SOC 2, while offering customer-managed encryption keys and compliance configurations. For end users, the collaboration platform 101 prioritizes data privacy with clear consent mechanisms, data minimization, and privacy controls in services like online emails and cloud-based storage (e.g., OneDrive^{®}). OneDrive^{®} is a cloud-based storage service that lets users securely store, sync, and share files across devices. Across all scenarios, a security model of the collaboration platform 101 is provided based on the principles of Zero Trust which ensures that collaboration is both productive and protected.

For instance, when the file has sensitivity label(s), such as "confidential," "internal," or "private", extra steps are required to fetch the user's files. These labels are typically managed through a sensitive information protection system that automatically applies security controls (e.g., encryption, access restrictions, watermarking, visual markings, and the like) based on the content or user behaviors.

In one implementation, a shredder service 102a is applied to fetch specific versions of a document of the user with sensitivity labels. The shredder service 102a is able to get decrypted files from the sensitive information protection system as it is whitelisted with the system. For example, the shredder service 102a produces the full file back to the argumentation loop 206. Alternatively, the shredder service 102a fetches files while skipping its media.

The collaboration catch-up plugin 110a hooks into existing and compliant applications for trigger and output surface. Thus it does not require additional work for user authentication and authorization. However, accessing the API developer platform 102 and the shredder service API to fetch a document will fail, if the user does not have permission to access the document. For example, when the user is already in the document context and authenticated, yet requests to see updates in a different document than the opened document. In this case, when the argumentation loop 206 calls the shredder API to fetch the other document, and fails if the user does not have access to the other document.

LLMs are strong at understanding language, and can diff and summarize two TEXTs easily, but they are limited by context size which is as of now is around 128KB. If both versions of the TEXTs fit under this limit, LLM can be used directly. For large TEXTs which do not fit LLM context size, there are several ways to reduce the file/version sizes, such as skipping media from the versions, zipping the versions, a chunking and stamping strategy, converting the files to a simpler format, and the like.

For example, Office documents follow OXML format. By understanding OXML schema, the collab catch-up plugin 110a extracts TEXT from the entire file. TEXT can appear as part of various UI elements (e.g., tables, drawings, equations, etc.). Style information is also embedded inline within OXML with each UI element, and can be extracted with more sophisticated OXML parsing logic. Embedded media like images and videos are referred to in the main OXML by reference, while actual media content is stored separately in the file elsewhere.

The size reduction can occur before or after transmitting the versions from the API developer platform 102 to the collab catch-up plugin 110a. When the API developer platform 102 performs the file/version size reduction, the communication load to the collab catch-up plugin 110a is reduced, and the file in the reduced form may be saved and shared with other plugins than the collab catch-up plugin 110a.

In one implementation, the API developer platform 102 applies protocols like ZipIT to support large files (e.g., presentation files) while avoiding downloading the media files (e.g., images, videos, and the like). ZipIT is a secure file transfer protocol used primarily in enterprise environments to transmit files in a compressed and encrypted format. It combines standard ZIP compression with integrated encryption and access control mechanisms to ensure data confidentiality and integrity during transmission. While not a widely standardized protocol like SFTP or HTTPS, ZipIT is typically implemented through proprietary software solutions tailored for secure, compliant data exchange.

In another implementation, the API developer platform 102 chunks and stamps the file, and only loads those chunks that have an updated stamp. Additionally, the API developer platform 102 downloads files and chunks/stamps off peak, to have lesser deltas to load, comparing with on the fly computing. Large TEXTs can be chunked but then the system will not know which chunk to compare with other previous chunks, as TEXT blocks can move around their locations between versions. When large TEXT has concept of blocks with associated ID, and when these IDs remain same across versions, then it's easy to chunk large TEXT into TEXT BLOCKs, match on IDs, and then use the LLM 117a-1 to diff. Diff outputs by the LLM from different chunks can then be joined for a full diff of a document. For Office documents, there are durable IDs at various levels of the document structure which remain same across versions. This information can be used for correct chunking and diff can be achieved for arbitrary large documents.

In yet another implementation, the API developer platform 102 caches the versions in a simpler format (e.g., intermediate representation (IR), a graph/html representation of a file) instead of downloading the whole file, and just content without large video/image, thereby avoiding building extensive parsing/understanding of complex OXML.

IR is used in the information technology industries as a bridge between high-level programming languages and low-level machine code, enabling better code optimization, analysis, and portability across different platforms. When a program is compiled, it is first translated into an IR-a simplified, standardized form that retains the logic of the original code but abstracts away specific hardware or language syntax. This IR can then be analyzed for performance improvements, security vulnerabilities, or transformed for different execution environments, such as virtual machines or hardware accelerators. Widely used in compilers (like GCC, LLVM, or .NET's IL), IR allows developers and systems to work more efficiently with code, ensuring better performance, security, and cross-platform compatibility.

For collaboration catch-up, the IR format is preferred for semantic document representation and for substrate indexing to power grounding data for a web-based conversational AI (e.g., Sydney^{®}) that assists with general queries and web searches. By leveraging the IR format, the collaboration catch-up plugin 110a integrate in simpler way with rest of a substrate LLM 207 (including the LLM 117a-1). This implementation requires regularly converting the files to the IR format, which is still much cheaper than LLM calls on all files. The substrate LLM 207 is a unified platform that enables seamless integration, orchestration, and deployment of large language models across AI services and applications.

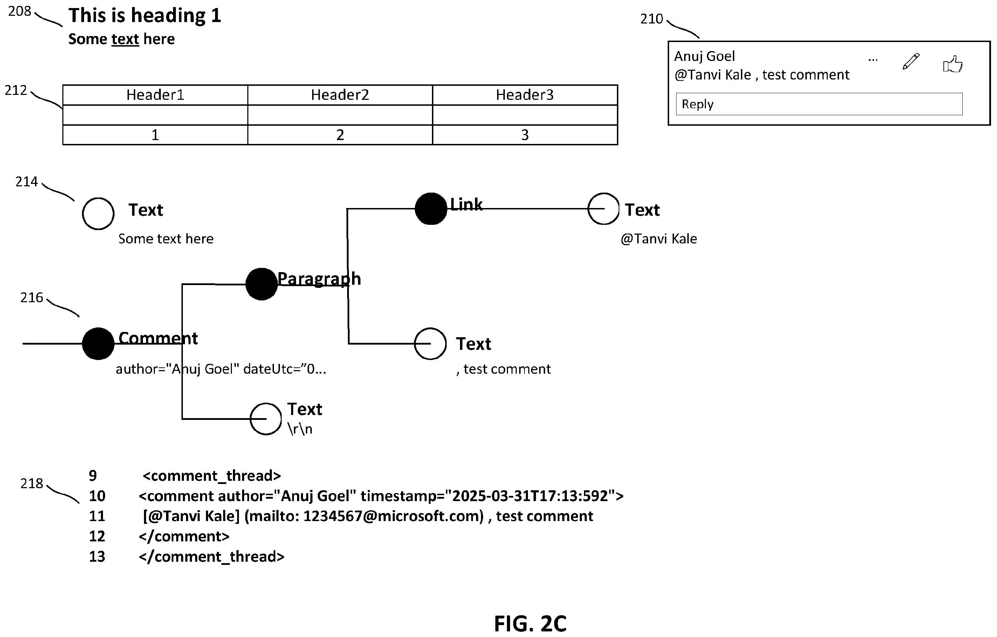

For example, the IR format allows anchoring comments to precise content ranges, storing comments in a way that supports collaboration (tracked by user and time), and keeping document content and annotations logically separate but linked. FIG. 2C are diagrams illustrating a sample comment in a word processing document, metadata and its IR. Both "some text here" and "The is heading 1" are visible within the body of the document 208. In this case, Anuj Goel added a sample comment of "@Tanvi Kale, test comment" to the word "text" in the line of "some text here" in the document 208. The comment box 210 depicts the sample comment. A metadata structure 212 includes three fields (header1, header2, header3) that is part of the file's underlying structure, guiding how the word processing application interprets or displays the content. The metadata fields include information like custom properties and content types of document content or the sample comment.

FIG. 2C shows a word IR 214 of the word "text" in the line of "some text here", and a comment IR 216 of the sample comment. The comment IR 216 outlines the relationships between different elements: Paragraph (serving as a central node), Comment (connected to the Paragraph, with author and date information), Text (appearing in multiple instances, linked to the Comment, Paragraph, and Link), and Link (connected to the Paragraph, with associated text "@Tanvi Kale"). The comment IR 216 visually represents the hierarchy and dependencies between text, comments, and links within a larger context like a paragraph, and illustrates how different content elements are nested or related within the sample comment. The IR of a comment in a word processing document context typically includes metadata such as the comment text, author, date, and the range of text it refers to. FIG. 2C shows the sample comment in OXML 218 (Table 5).

**Table 5**

| |
|---|
| 9 <comment_thread> |
| 10 <comment author="Anuj Goel" timestamp="2025-03-31T17:13:592"> |
| 11 [@Tanvi Kale] (mailto: 1234567@microsoft.com) , test comment |
| 12 </comment> |
| 13 </comment_thread> |

In this IR implementation, the collaboration catch-up plugin 110a still downloads the raw files from the API Developer Platform 102, and then works in conjunction with the condensing unit 115 to convert file data from OXML to the IR format, by running an IR parser based on Table 3. The data in IR is saved as the intermediate representation data 118b in the data storage 118. IR parsing is exhaustive and TEXT from all TYPEs of the elements parsed are emitted to IR, but IDENTITY/TYPE of only a subset of the elements is reflected in IR. In one implementation, when there is a TEXTBOX containing text "hello world", "hello world" is in IR, but there is no indication that it was inside a TEXTBOX.

**Table 6**

| Parsed in IR | | Kept in IR | |
|---|---|---|---|
| | • heading 1~6 | | • heading 1~6 |
| | • list | | • list |
| | • table | | |
| | • comment | | • table |
| | • EndNote | | • EndNote |
| | • Footnote | | |
| | • Header | | • Hyperlink |
| | • Footer | | • page |
| | • Hyperlink | | |
| | • Equation | | • paragraph |
| | • page | | • title |
| | • paragraph | | |
| | • title | | • style such as bold, underline, strikethrough, highlight, italic |
| | • font, font size, font color | | |
| | • style such as bold, underline, strikethrough, highlight, italic | | • slide |
| | • chart | | • slide title |
| | • SmartArt | | |
| | • slide | | • image |
| | • slide title | | |
| | • slide master | | |
| | • alt text | | |
| | • image | | |
| | • sheet | | |
| | • text box | | |
| | • mention | | |
| | • checkbox | | |
| | • drawing | | |
| | • task | | |

To retrieve IR for protected documents, the collaboration catch-up plugin 110a applies the shredder service 102a to obtain the documents, then the IR parser processes the documents based on Table 6. In addition, the IR parser processes the documents without media content but include media hashes. A common hash function used for hashing an image is SHA-256, which generates a fixed-size 256-bit hash that uniquely represents the image data.

Step 5: Based on the fetched two versions of the file, the collab catch-up agent 110 parses text, table and other elements from each version of the file as a standardized file format (e.g., Open XML, OXML) and preserves IDs wherever available, for representing content data across word processing documents, spreadsheets, presentations, and the like. Open XML uses a ZIP-compressed archive of XML files and other resources to structure content, styles, and metadata. This format enables easier data exchange, automation, and interoperability across different systems and platforms.

Step 6: The collab catch-up agent 110 generates version difference data ("Diff") of the two versions by scoping Diff based on ID match, labeling each diff as added/updated/removed, and keeping old and new values. The Diff data is saved as the diff data and summary data 118d in the data storage 118. The collab catch-up agent 110 also generates a prompt (See Table 7) for the LLM 117a-1 to generate document/comment change data. In this example, the Diff is generated within the argumentation loop 206. Another option is to call an application service to do Diff. Such Diff service is a new app service or an extension of a current service. For example, when all Diff functionality cannot be fit inside the argumentation loop 206, the collab catch-up agent 110 calls a spreadsheet app service to get the Diff, or get a pre-generated cache by a spreadsheet application. In this case, it may require the spreadsheet application runtime to figure out the user intent. In addition, pure diff of what changed is sufficient for the LLM 117a-1 to understand full meaning/context behind a change, so the collab catch-up agent 110 extracts nearby section headings, table headers, etc., and use the information to augment the LLM prompt thereby augmenting Diff with the surrounding context, for the final nodes which are left in Diff.

Furthermore, the collab catch-up agent 110 determines and shows who made the respective change (e.g., a comment change), which requires knowledge of the intermediate versions as well. Instead of retrieving just the two versions, the collab catch-up agent 110 gets intermediate versions as well to know who made those changes. This will be scaled better by pre-computing diffs between major versions.

**Table 7**

| |
|---|
| Background |
| You are a professional editor with years of experience of summarizing content changes in a document and comments therein and organizing those content changes in a readable and concise manner. Today you are assisting a Super-VIP client to summarize recent changes to a very important document. |
| I am giving three sections with regard to the changes to the document: 1. Contributor to the document. 2. Content changes to the document. 3. Comments in the document. |
| You will perfectly summarize all three sections one after another. OK, let's get started! |
| Contributors to the document: |
| Following is a name list of contributors who recently made changes to the document: |
| ${contributors} |
| You will summarize them in just one line and sort the names in an alphabetical order. |
| Content changes to the document: |
| Next I am providing you the content changes of the document: ${changeSummary} From the provided content changes, you will draft two sub-sections: 1. Summary of Updates 2. Key Updates |
| For Summary of Updates, you must abstract the content changes precisely in just one line. For Key Updates, you must follow the below principles to summarize: - This is a very concise high-level summary of the changes in each Section. It MUST be kept very lean, clear and concise. Each summary MUST be only one sentence long and start with a bullet point. - Each summary derives just the main idea of the change content based on context, rather than regurgitating the change content in that section. - You may skip minor updates like Formatting changes, Spelling corrections, etc. - You may skip the "Sections" with minor changes. - Combine similar summaries within the same "Section" to just one update. Condense this to under two sentences. - Combine multiple "Sections" with deletions to just one update. Condense this to under two sentences. |
| Comments in the document: |
| Now I am giving you the comments in the document: ${commentSummary} |
| From the provided comments, you will draft two sub-sections too. Leave these sub-sections empty if there are no comments in the document: 1. Summary of Comments 2. Key Comments |
| For Summary of Comments, you must abstract each one of all the comments precisely in just one line. |
| For Key Comments, you must follow the below principles to summarize: - This is a very concise high-level summary of the comments. It MUST be kept very lean, clear and concise. Each summary MUST be only one sentence long and start with a bullet point. - Each summary derives just the main idea of the comment content based on context. - If there are multiple comments and replies, the output must be logical and contain summary of comments chain or discussion - You may skip minor comments like Formatting or Spelling suggestion, etc. - Combine similar single comments made by a same person to just one comment. Condense this to under two sentences. |
| Your final output MUST be in JSON format. The JSON must be valid and well-formed. If any field is empty, return it as an empty string. Do not include any other text or explanation in the output. Here are the fields for the JSON:\ - contributors: Output of Section "Contributors to the document" represented as a JSON Array\ - summaryOfUpdates: |
| Output of section "Summary of Updates". \ - keyUpdates: Output of section "Key Updates" represented as a JSON Array.\ - summaryOfComments: Output of section "Summary of Comments". \ - keyComments: Output of section "Key Comments" represented as a JSON Array.\ |
| E.g., {"contributors": ["Anuj Goel", "Han Na"],\ "summaryOfUpdates": "Multiple sections and content were added, updated, or deleted.", \ "keyUpdates": ["Update1.", "Update2"],\ "summaryOfComments": "Multiple comments were added emphasizing on improving Testing and monitoring",\ "keyComments": ["Comment1.", "Comment2"] } \ |

By giving it OXML fragments of before and after change, the collaboration catch-up plugin 110a applies another LLM to identify the change/Diff not only in TEXT but also in its formatting, styling and changes in other UI elements like drawing, equations, symbols, medias, and the like. Representing things in XML format hits LLM's context size limit much faster, and multiple LLM calls are required to diff the full document. Several strategies can reduce prompt size: XML pruning (by removing non-essential nodes which may not represent real user change, JSON format, inline Diff, patch Diff, IR format, and the like. Under the inline Diff strategy, instead of sending as-it-is before and after OXML fragments to the LLM 117a-1, the collaboration catch-up plugin 110a uses xml-diff to represent changes inline, so that non-changed xml nodes are sent only once. Under the patch Diff strategy, the collaboration catch-up plugin 110a uses xml-diff to identify PATCH that can transform a before OXML fragment to an after OXML fragment, and sends the before version and PATCH to the LLM 117a-1.

In another implementation, the collaboration catch-up plugin 110a generates Diff on the files in the IR format, and then sends the Diff to the LLM 117a-1 to summarize based on the IR format. When requiring the previous version of the file, the collaboration catch-up plugin 110a can still ask the API Developer Platform 102 to download such file, and converts to the IR format on the fly. Once the Diff in the IR format are saved in the substrate LLM 207, the LLM 117a-1 retrieves the Diff directly from a substrate item store without the need of the raw files. Alternatively, once the Diff in the IR format is saved in substrate LLM 207, the web-based conversational AI (e.g., Sydney^{®}) may directly retrieve relevant data in the IR format and use it as grounding data in its responding-state without a need of a separate skill/plugin which introduces higher latency. IR-diff as grounding data is calculated offline and cached, which avoids on-the-fly calculation by the collab catch-up plugin 110a incurring higher latencies and re-computing CPU/GPU cogs.

Since the IR format is a graph, the file in the IR format is treated as graph while diffing. As there is no existing graph diff utility, the system builds a new utility for diffing IR graphs based on an IR diff processing executed by the diff unit 112 in conjunction with the LLM 117a-1 as listed in Table 8.

**Table 8**

| | |
|---|---|
| - Breadth-First Search (BFS) traversal of both graphs | |
| - At each level, run match-nodes to align nodes from old graph to new graph | |
| | ∘ If the node has ID, use this to pair nodes |
| | ∘ If the node does not have ID, then collect all the IDs from its children (and their subtrees) and see if there is any match between the two sets. If yes, then pair them up |
| | ∘ If no ID based match, then match based on node name if node name is unique in siblings |
| | ∘ If no ID and Name based match, then compare node's xml to prune out matching nodes and then for remaining nodes assign unique random ID. Random ID based nodes should never match and will get treated as delete and add change. |
| - Compare node xml in paired nodes | |
| | ∘ If same, no need to further examine sub-graph from that node |
| | ∘If not-same, then recursively repeat whole process |

The IR format preserves all the TEXT information along with the style information. It is simple, structured and short comparing with OXML. For Diff calculations, the IR diff processing fills some gaps. The existing IR conversion drops all IDs information, which makes diff hard as it must look at the entire document. The IR diff processing preserves IDs from OXML elements to make Diff very scoped, especially word processing, presentation, and spreadsheet types of IDs. For example, the IR diff processing preserves Word^{®}'s "paraId" representing a paragraph ID and remaining unchanged during edits, PowerPoint^{®}'s "sldId" representing a slide ID and remaining unchanged during edits, Excel^{®}'s "sheetId" representing a sheet ID and remaining unchanged during edits, and the like.

As mentioned, the IR parser may parse text "hello world", in IR, but not TYPE information that it was inside a TEXTBOX. However, the IR diff processing preserves such TYPE information when the text and/or the TYPE information was changed, since keeping TYPE information helps the LLM 117a-1 to construct more meaningful change-summaries. For example, when the user has added an equation in the document, the IR format has the formular as text content and keeps information that it's a "formula/equation."

The existing IR format conversion fails to represent Non-TEXT elements (e.g., table, equation, image, and the like) and their properties. For example, TEXTBOX's text content is preserved, but TEXTBOX's border/background are not. The IR diff processing also preserves such Non-TEXT elements and their properties when the text and/or Non-TEXT elements and their properties were changed, since keeping such information helps the LLM 117a-1 to construct more meaningful change-summaries. With the change conditions, the IR diff processing captures the non-text element changes and/or the one or more properties changes, thereby enriching the IR diff conversion without overly-burdening the IR conversion process.

The IR diff processing listed in Table 5 works for word proceeding files and presentation files, as there are IDs which can scope the node comparison. However, this does not work for spreadsheet files as the original spreadsheet OXML does not have row/cell IDs which makes it practically impossible to find out what changed in a large spreadsheet. The system thus uses an alternative method of accessing or tracking document revision history (e.g., a Revision-Logs alt-stream from SharePoint Online) to identify which cells got changed.

Excel^{®} maintains user edits in a stream called Revision-Log, which mostly appends only a stream with periodic trimming and stripping based on the size/duration of the stream. The IR diff processing first retrieves this alt-stream, and then parses it to understand revision-records. With the revision-log approach, the IR diff processing no longer needs to download/parse/understand the previous version of the spreadsheet file. Only the latest file together with revision-log stream data is sufficient to find out what changed from a specific point in time.

To retrieve the Revision-log stream, the IR diff processing applies a VROOM API to retrieve the revision-log. The stream identifier is dcontent_{{6385c870-7f8d-428c-9445-de467fcdaebf},1}. The dcontent_ part is identifying the partition, and the rest of it is an extended GUID used as the stream name. It should be the same for every file. There is also a new work Excel^{®} is doing for "Extended Revision Log," which has user edits for longer duration.

To parse the Revision-log stream (in xml), the IR diff processing uses a standalone library as a starting point. That functionality gets compiled into RevisionEventProvider.dll, which exposes APIs to read a revision stream and identify relevant change events. Since the cells location can move around after they have been recorded in the revision-log, the standalone library also does a reference-update by looking at all of the revision-records. In this way, the IR diff processing gets in revision-record points the correct location of the cell in the latest version of the file.

In addition, the system provides an IR library for parsing/diff that supports reading/parsing Revision-Logs streams and has its data available as companion data to the IR diff processing.

The Revision-Logs alt-stream is typically used when standard version history features are insufficient or require more customized data extraction. This alt-stream can be leveraged through Microsoft Graph API or SharePoint REST API to programmatically retrieve logs of file changes, user edits, timestamps, and version metadata. It is particularly useful in auditing scenarios, compliance monitoring, or when integrating with third-party document management systems. Unlike the standard UI-based version history, this stream allows for more granular control and automation in managing document revisions across SharePoint libraries. For example, Table 9 lists IR requirements for three file types.

**Table 9**

| | | | |
|---|---|---|---|
| - Docx: | | | |
| | ∘ Title differentiation between document's Title property vs body content | | |
| | Need tableRow and tableCell along with table IR node | | |
| | ∘ tableRow needs paraId | | |
| | ∘ To understand: | | |
| | | • Reasoning behind keeping <heading> node as parent to everything after it until lowered heading shows up? | |
| | | • Difference between heading and headingContent | |
| - Pptx: | | | |
| | ∘ SlideId in PPT (different from slide/page number) | | |
| - Xlsx: | | | |
| | ∘ Need sheetIds | | |
| | ∘ Need cell ref i.e. D12 with each cell value | | |
| | ∘ Need cell format i.e. numFmtId for currency, percentage etc | | |
| - Diff: | | | |
| | ∘ Keep old/deleted and new/changed IR nodes | | |
| | ∘ Keep context IR nodes for each change | | |
| | | | • Nearby text |
| | | | • Nearby heading |
| | | | • Table header |
| | ∘ Consume RevisionLog alt-stream for Excel | | |

As such, Diff is represented in the IR format as IR-diff. Table 10 lists a rough structure of a semantic document diff result. IR-diff is a subset of branches from the original graph where leaf nodes have changed. Each branch is full path from root to leaf node. Leaf nodes which were changed have additional attributes to denote whether its added/removed/updated. The IR diff processing also tracks parent node changes to catch any re-ordering of elements. Merging IR-diff across versions is to collapse matching branches in order of time. After collapsing IR-diff branches, the IR diff processing uses latest full IR to grab nearby context for the final nodes which are left in IR-diff. Context could be of two types: surrounding text and nearby heading. Surrounding text is obtained from the immediate neighbors (left and right) of a changed node. If there is not enough text in neighbors, then the IR diff processing goes to a parent node of a changed node, and grabs text from its neighbors. Nearby heading is specialized context which requires finding immediately preceding node with specific properties. These properties could be "style" indicating headings or table's first row indicating a table header.

**Table 10**

| |
|---|
| public class SemanticDocumentDiff |
| { |
| public List<IRNodeDiff> Diffs { get; set; } |
| } |
| public class IRNodeDiff |
| { |
| public IRNodeDiffType Type { get; set; } |
| public IRNode Old { get; set; } |
| public IRNode New { get; set; } |
| public IRNodeDiffContext Context { get; set; } |
| } |
| public enum IRNodeDiffType |
| { |
| Unknown, |
| Same, |
| Added, |
| Removed, |
| Updated, |
| } |
| public class IRNodeDiffContext |
| { |
| public List<IRNode> Previous { get; set; } |
| public List<IRNode> Next { get; set; } |
| public IRNode Heading { get; set; } |
| public IRNode TableHeader { get; set; } |
| } |

A Diff IR Node needs to capture the properties listed in Table 11 which are saved, for example, to the API developer platform 102 or any cloud storage. In one implementation, the IR diff processing extends existing IRNode to have Dictionary<string, object> properties to capture the properties in Table 8. In another implementation, the IR diff processing defines a new DiffIRNode to capture these properties. In addition, the IR diff processing adds the schema in Table 8 into a document parser library to make them available for consumption by the LLM 117a-1.

**Table 11**

| |
|---|
| • ChangeType => Add/Removed/Updated/Moved |
| • ContextType => NearBy/Heading/TableHeader |
| • CurrentNode => Full IR node in case of Add/Updated |
| • PreviousNode => Full IR node in case of Removed |

In one implementation, the IR diff processing builds a knowledge graph with all information including IR and CIP, as an enriched knowledge layer built on top of the standard IR Graph. The knowledge graph is saved in the relationship graph database 118c. The knowledge graph is designed to capture deeper relationships between nodes (e.g., people, files, topics, and activities across an organization). It extends the basic connections (like "user owns document") into more meaningful insights, such as identifying expertise areas, related topics, project contexts, and how different pieces of information are semantically linked. This knowledge graph has capabilities listed in Table 12.

**Table 12**

| | | |
|---|---|---|
| • Be able to generate IR of any version of a file at runtime and cache it | | |
| • In the file's Knowledge graph, have additional info | | |
| | ∘ Revisions metadata | |
| | ∘ Array of diffs across subsequent major versions i.e. [diff(1,2), diff(2,3), diff(3,4)...diff(N,LATEST)] | |
| | | • Update this every time file changes |
| | ∘ Generate LLM-based diff-summary for predefined time windows i.e. 1d, 3d, 1week, 2weeks | |
| | | • Update this every time file changes which produces new diff |
| • Projecting part of Cortex data in Substrate for indexing | | |
| • Enriching enterprise_search skill in Sydney with Cortex data | | |

Table 13 lists an example knowledge graph augmented with versions/diff details.

**Table 13**

| |
|---|
| let data = { |
| cortex: { |
| change_summaries: [ |
| { |
| generated_at: "2021-10-08T12:00:00Z", |
| change_period: "Days _3", // enum for predefined periods |
| llm_summary: "" |
| }, |
| { |
| generated _at: "2021-10-08T12:00:00Z", |
| change_period: "Weeks _2", // enum for predefined periods |
| llm_summary: "" |
| } |
| ], |
| versions: [ |
| { |
| id: "10.0", |
| lastModifiedDateTime: "2024-10-08T18:21:01Z", |
| lastModifiedBy: {}, // captures user details |
| changes: |
| { |
| IR_changes: [ |
| { |
| before: { // details from previous version |
| node: "", // serialized IR node |
| text: "", // extracted text of IR node |
| context: {} // captures surrounding text/headings/table-headers/page- |
| slide number etc |
| }, |
| after: { // details from current version |
| } |
| } |
| ] |
| } |
| } |
| ] |
| } |
| } |

Step 7: The LLM 105a-1 received the prompt and the content changes (Diff or IR-diff), summarizes the content changes with a pre-defined level of verbosity and citations to actual documents/comments, and ranks documents/comments based on the content changes. For example, the predefine level summary of a file is an executive summary (high-level updates). Upon selection of a file, more details of changes in the file and comments surface.

In one implementation, the LLM 105a-1 performs comment sentiment analysis, and flags items like unresolved discussions that may need closure or follow-up. In another implementation, the LLM 105a-1 applies comment summary filters to filter comments by who made the comments, or by comment type (e.g., question, suggestion, approval, task, assignment, and the like). In another implementation, the LLM 105a-1 performs comment summary ranking based on signals like organizational charts (e.g., manager > coworker > other employees), or comments with tasks, follow-ups, and suggestions over simple acknowledgements. In another implementation, the LLM 105a-1 performs comment summary across different file types, such as including a comment discussion from a different application into the current comment summary when it adds value to the current document. For example, "Matthew made a suggestion to add conversion numbers on a table at the end of this document." As another example, "Conversion numbers were discussed on a separate comment thread on a related file, Conversion.xlsx, mentioning an average of 90% conversion for the core scenario."

In yet another implementation, the LLM 105a-1 generates content summaries indicating document "doneness", such as understanding of document changes across user edits over time, comment activity, and changes since the user last viewed the document. The LLM 105a-1 determines "doneness" of document sections/areas by looking at signals like comment presence, comment resolved status, tracked changes, highlighting/formatting of section text, etc. In another implementation, the LLM 105a-1 causes summaries of document activities the user may be interested in to surface, e.g., What edits have been made to [section name]?, What comments were left for the user to work on?

In another implementation, the LLM 105a-1 generates an automatic catch-up digest on important files delivered to the user's Inbox/Teams. This digest can also include personalized summaries with specific follow-up tasks or pending actions items of the user. In another implementation, the LLM 105a-1 generates proactive emails / Teams notifications based on important information or content in document(s). For example, a document for a project with tight deadlines, the collab catch-up agent 110 uses the LLM 105a-1 to proactively generate and send a summary of progress made since the last team sync and what's left to do to the entire team group chat.

Step 7.1: The LLM 105a-1 returns the summary of the content changes to the collab catch-up agent 110. Step 8: The collab catch-up agent 110 then sends the summary of the content changes to the AI agent 105 to present to the user (e.g., as shown in FIG. 2A). In one implementation, the summary of the content changes is in a JSON format that defines a UI layout (e.g., an adaptive card). The adaptive card allows developers to create content that looks native to a host application, and can adapt to different screen sizes, themes, and accessibility needs. Adaptive Cards present rich, interactive, and flexible UI content in a consistent format across different Microsoft platforms and services like Teams, Outlook, Bot Framework, Windows Timeline, and others
As such, the system generates summaries of comments where the user is directly mentioned, from static files and/or streams of files. The system also summarizes replies in a discussion where the user commented. The system prioritizes based on an organization hierarchy, for example prioritized by a manager higher up in the organization chart than these being managed by the manager. The system prioritizes activities and comments from collaborators whom the user regularly collaborate with e.g., in Teams, Outlook, or meetings. The system can prioritize comments where a timeline or deadline may be present. The system summarizes "who" made the change. Tasks can be assigned based on summaries generated.

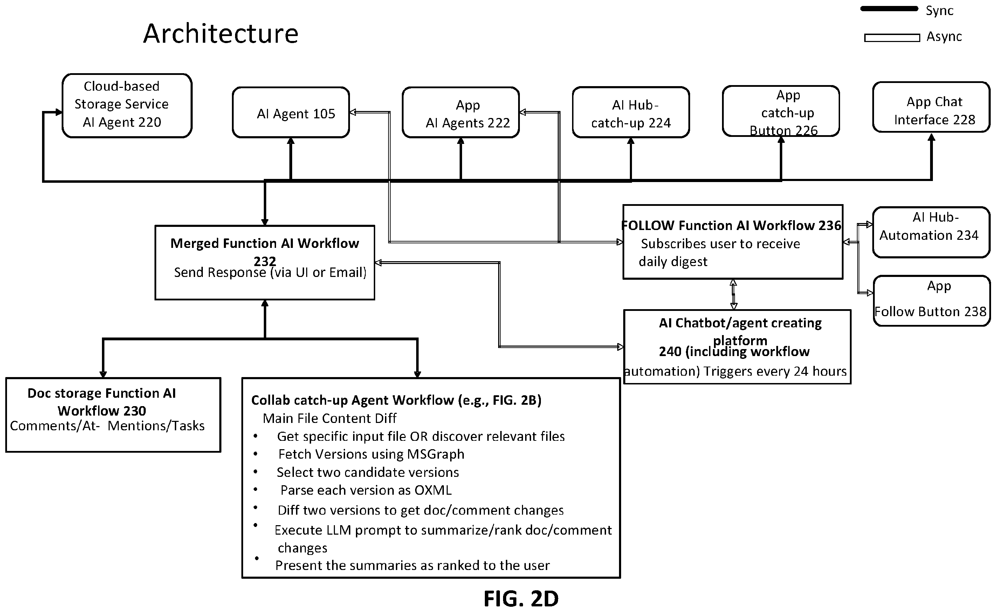

FIG. 2D is a block diagram that illustrates a high-level architecture of the collaboration catch-up approach and various integration points. In a synchronized fashion, the collab catch-up agent 110 is triggered when the user opens a file in an application when coming back in the office, when the user enters a prompt "catch-up" in a chat with the AI agent 105 or any other AI agents (e.g., a cloud-based storage service AI agent 220, an application AI agent 222, etc.), and when the user execute AI-Hub catch-up 224. The collab catch-up agent 110 then starts the collab catch-up agent workflow in FIG. 2B by retrieving the document versions with comments/@Mentions/tasks via a document storage function AI workflow 230, then sends a collaboration catch-up response (e.g., in an email or on a UI as in FIG. 2A) to the user via a merged function AI workflow 232 correspond to the trigger condition. As mentioned, the workflow in FIG. 2B includes steps of getting a specific user-input file or discovering user-relevant files, fetching document versions using the API Developer Platform 102, selecting two candidate versions, parsing each version as OXML, getting Diff between the two versions to get document/comment changes, executing an LLM prompt to summarize/rank the document/comment changes, and presenting the summaries as ranked to the user.

The opened application can be an application for word processing, spreadsheets, email, video meetings, cloud storage, content management, document storage, intranet development, and workflow automation, designed to facilitate communication, collaboration, productivity across organizations, or the like. The application AI agents 222 can be built in the application.

Microsoft AI-Hub^{®} is a centralized platform that provides resources, tools, and solutions to help users build, deploy, and manage AI applications efficiently. AppChat^{®} is a conversational interface for a user to chat directly with applications using natural language. AppChat^{®} enables AI-functionality tailored to an application it is running in (e.g., a host application), as well as to chat directly with applications (e.g., add-ins) using natural language, allowing users to control or retrieve information from these apps through chat, powered by AI.

In an asynchronized fashion, the collab catch-up agent 110 is triggered when the user enters a prompt "follow" in a chat with the AI agent 105 or the other AI agents, when the user opens AI-Hub automation 234 to automate a follow function workflow 236, or when the user clicks a follow button 238 in the opened application. The follow function workflow 236 subscribes the user to receive a daily digest of file changes, by activating an AI chatbot/agent creating platform 240 (e.g., Copilot Studio^{®}) to work in conjunction with the merged function AI workflow 232 to automates the collab catch-up agent workflow in FIG. 2B every 24 hours. As a result, a follow response with content similar to the collab catch-up response is sent (e.g., in an email or on a UI as in FIG. 2A) to the user via the merged function AI workflow 232 and the AI chatbot/agent creating platform 240 every 24 hours. Copilot Studio^{®} is a low-code platform for creating and deploying AI-powered chatbots and agents, and it provides a cloud-based service that enables users to create automated workflows between apps and services to streamline tasks and improve productivity.

Once one or a group of files has been "followed" for 30 days with no changes, the subscription is removed and the user will see this as a message and subsequently, will not see this file or file group in the digest. If a file/group that the user is following, gets deleted or renamed, this will be notified to the user in the summary. The user will continue to follow the file/group even after renaming, unless the user specifically unfollow the file/group. The summaries have citations of comments and/or references that when clicked will take the user to the relevant portion of a relevant file.

The collaboration catch-up approach is applicable to different industries, such as tracking updates to patient care documents, test results, or other important notes co-authored by healthcare practitioners. As another example, the collaboration catch-up approach can track changes in reports/spreadsheets, compliance documents and investment proposals, and flag critical updates that might impact financial decisions or regulatory compliance in financial industry. As yet another example, the collaboration catch-up approach can track latest changes in collaborative projects made by classmates, comments and feedback provided by teachers, assignment document content, updates, and due dates. The collaboration catch-up approach can also summarize how feedback has been addressed by students between document versions and whether there are open items.

The AI models can be trained with training datasets to provide initial and ongoing training for each of the models. In some implementations, labeled training data are used to train one or more of the AI models via deep neural network(s) or other types of ML models. The initial training may be performed in an offline stage. Additionally, and/or alternatively, the one or more AI models may be trained using batch learning. Different training mechanism may be used for different AI models.

In some implementations, to provide ongoing training, the approach uses training data sets received from the AI models. Furthermore, output data for the AI models can be used to update one or more of the training datasets in order to provide updated and ongoing training. Additionally, the training data can be retrieved from other pre-trained mechanisms.

In one embodiment, the collaboration catch-up approach can improve the AI models using feedback loops based on, for example, user behavior and/or feedback data (e.g., from entity agents, partners, customers, and the like). In one embodiment, the approach can improve a generative AI model using user behavior and/or feedback data as training data.

FIGS. 3A-3C are example user interfaces of a collaboration catch-up approach that implements the techniques described herein. The example user interface shown in FIGS. 3A-3C is a user interface of a word processing application in a web browser (e.g., the browser application 122), such as but not limited to Microsoft Edge^{®}. However, the techniques herein for collaboration catch-up are not limited to use in the word processing application and may be used for other types of applications including but not limited to presentation applications, website authoring applications, collaboration platforms, communications platforms, and/or other types of applications in which users create, view, and/or modify files.

FIG. 3A shows an example of the user interface 305 of a word processing application in which the user is interacting with a programmatic interface to open up a client letter file. The user interface 305 includes a control pane 315, a content pane 325 and a scrollbar 335. In some implementations, the control pane 315 includes a File button 315a, a Home button 315b, an Insert button 315c, a Layout button 315d, a Review button 315e, a Collab catch-up button 315f, an Other Options button 315g, and a search field 315h for triggering the respective functions in the word processing application. In FIG. 3A, the content pane 325 shows a document 325a (e.g., a customer service letter) and an AI agent with a chat box 325b displaying "Ask me anything," and "Some ideas to get you started" with three options: "Catch-up on all files," "Help me prepare for a meeting," and "Generate an image of [description]."

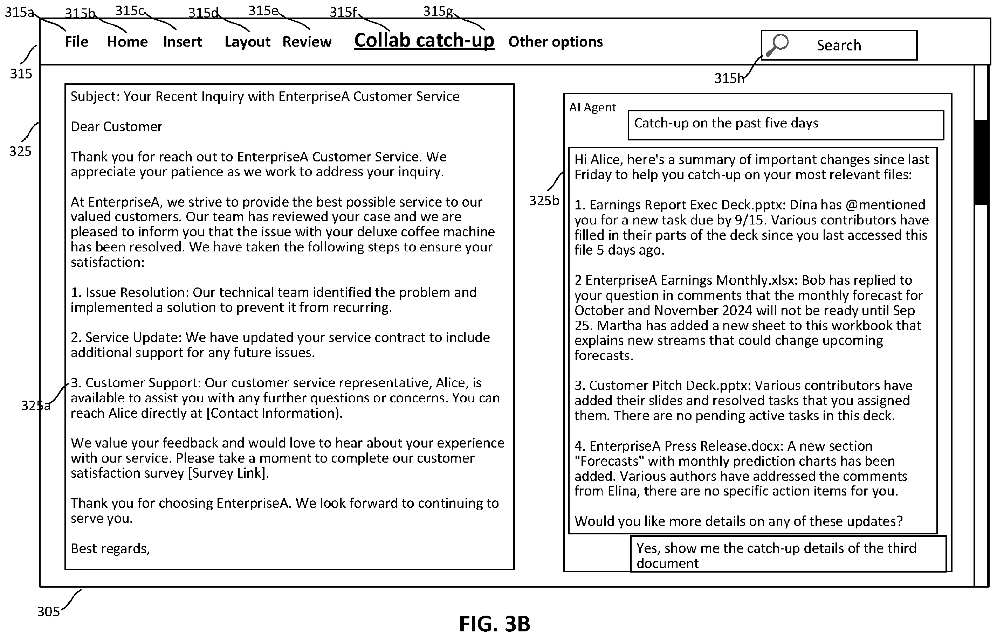

To trigger the collab catch-up agent 110, a user clicks either the Collab catch-up button 315f in the control pane 315, or the option 325c "Catch-up on all files" in the chat box 325b. As shown in the chat box 325b, the user first enters "Catch-up on the past five days." In response, the collab catch-up agent 110 generates and ranks change summaries of the user-relevant files for the AI agent 105 to displays in the chat box 325b in FIG. 3B. In this case, the collab catch-up agent 110 summaries and ranks four documents for the AI agent 105 to displays in FIG. 3B.

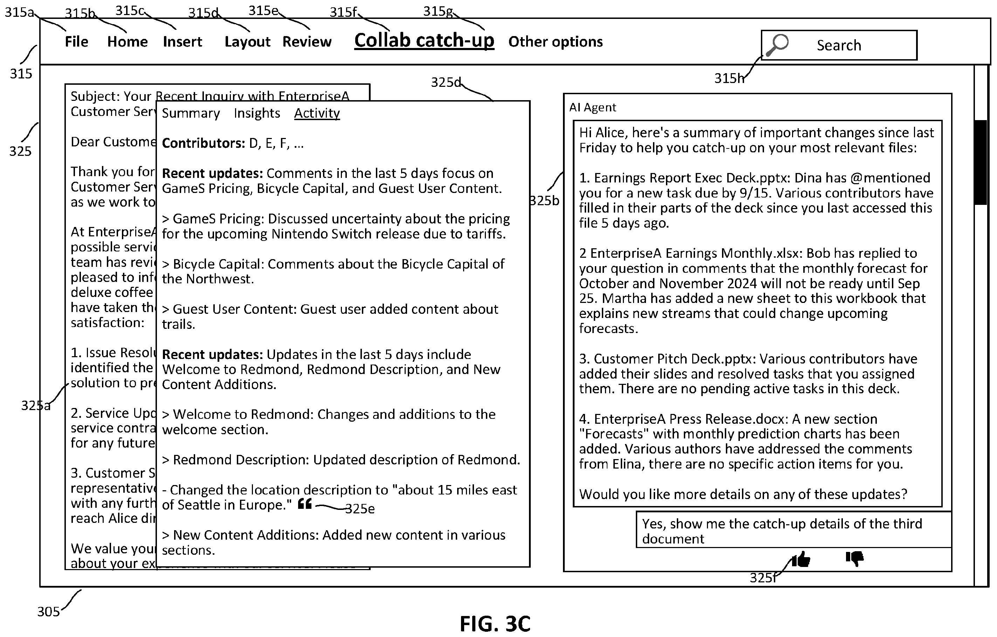

After the user enters the chat box 325b "Yes, show me the catch-up details of the third document" in FIG. 3B, the AI agent 105 opens a new window 325d in FIG. 3C to show the collab catch details of the third document summary, according to the above-discussed implementations. The third document is Customer Pitch Deck.pptx, with a summary of "Various contributors have added their slides and resolved tasks that you assigned them. There are no pending active tasks in this deck."

In FIG. 3C, the new window 325d includes a Summary button, an Insides button, an Activity button 315c, and a Discussion button. When the Summary button is selected, the new window 325d displays content summaries at a document level. When the Insides button is selected, the new window 325d displays content like the time the document was created, the author created the document, How a length of the document, a number of iterations the document has been modified, and additional details such as summaries at a task level. When the Activity button is selected as shown in FIG. 3C, the new window 325d displays what has changed in the user-relevant documents during a time period/window, such as the main contributors D, E, F, ... of the document changes and/or the comment changes, recent comments and their summary, and recent updates and their summary. In the window 204, there are three comment focuses listed under "Recent comments" and their summary: "Comments in the last 5 days focus on GameS Pricing. Bicycle Capital, and Guest User Content." There are three document update focuses under "recent updates" and their summary of "Updates in the last 5 days include Welcome to Redmond, Redmond Description, and New Content Additions." In FIG. 3C, the collab catch-up agent 110 further provides a citation icon 325e for the user to select to see the original comment lined with the document section.

In FIG. 3C, the collab catch-up agent 110 further provides a feedback loop by augmenting thumbs up and thumbs down buttons 325f for each AI-generated document summary in the user interface 305. If the user dislikes a response, the feedback loop can ask why and use the open-ended comment or verbose (OCV) feedback to improve the response. A thumbs down click could also prompt the user to indicate whether the response was too long, too short, missing information, and the like. The user prompts, the response, and the user feedback are submitted to the collaboration platform 101 to generate another response using the AI agent 105 and/or to improve the AI models. The AI-based collab catch-up generation thus incorporates user feedback in real-time or in substantially real-time, and allows user inputs via intuitive user interfaces.

In some implementations, the collaboration platform 101 includes moderation services that analyze commands, user prompt(s), user feedback, and responses generated by the AI agent 105, to ensure that potentially objectionable or offensive content is not generated or utilized by the collaboration platform 101.

If potentially objectionable or offensive content is detected in the user prompt(s), the user feedback, and the AI-generated responses, the moderation services provides a blocked content notification to the entity agent device 120a indicating that the prompt(s), the user data, and/or the response(s) is blocked from forming the system prompt. In some implementations, the request processing unit 111 discards any user data that includes potentially objectionable or offensive content and passes any remaining content that has not been discarded to the request processing unit 111 to be provided as an input to the AI agent 105. In other implementations, the AI agent 105 discards any content that includes potentially objectionable or offensive content and passes any remaining content that has not been discarded to the generative models as an input.

The moderation services can be implemented by a machine learning model trained to analyze the content of these various inputs and/or outputs to perform a semantic analysis on the content to predict whether the content includes potentially objectionable or offensive content. The moderation services can perform another check on the content using a machine learning model configured to analyze the words and/or phrase used in content to identify potentially offensive language/image/sound. The moderation services can compare the language used in the content with a list of prohibited terms/images/sounds including known offensive words and/or phrases, images, sounds, and the like. The moderation services can provide a dynamic list that can be quickly updated by administrators to add additional prohibited terms/images/sounds. The dynamic list may be updated to address problems such as words or phrases becoming offensive that were not previously deemed to be offensive. The words and/or phrases added to the dynamic list may be periodically migrated to the guard list as the guard list is updated. The specific checks performed by the moderation services may vary from implementation to implementation. If one or more of these checks determines that the textual content includes offensive content, the moderation services can notify the collaboration platform 101 that some action should be taken.

In some implementations, the moderation services generates a blocked content notification, which is provided to the entity agent device 120a. The native application 124 or the browser application 122 receives the notification and presents a message on a user interface of the application that the user prompt received by the request processing unit 111 could not be processed. The user interface provides information indicating why the blocked content notification was issued in some implementations. The user may attempt to refine a natural language prompt to remove the potentially offensive content. A technical benefit of this collaboration catch-up approach is that the moderation services provides safeguards against both user-created and model-created content to ensure that prohibited offensive or potentially offensive content is not presented to the user in the native application 124 or the browser application 122.

As mentioned, the collaboration platform 101 complies with privacy guidelines and regulations that apply to the usage of user data included in the content to be semantically analyzed to ensure that users have control over how the collaboration platform 101 utilizes their data. The user is provided with an opportunity to opt into the collaboration platform 101 to allow the collaboration platform 101 to access the user data and enable the generative models to generate a response according to user consent. In some implementations, the first time that an application, such as the native application 124 or the browser application 122 presents the data analysis assistant to the user, the user is presented with a message that indicates that the user may opt into allowing the collaboration platform 101 to use user data included in the content to support the content generation functionality. The user may opt into allowing the collaboration platform 101 to access all or a subset of user data included in the content to be semantically analyzed in a video. Furthermore, the user may modify their opt-in status at any time by selectively opting into or opting out of allowing the collaboration platform 101 from accessing and utilizing user data from the content as a whole or individually.

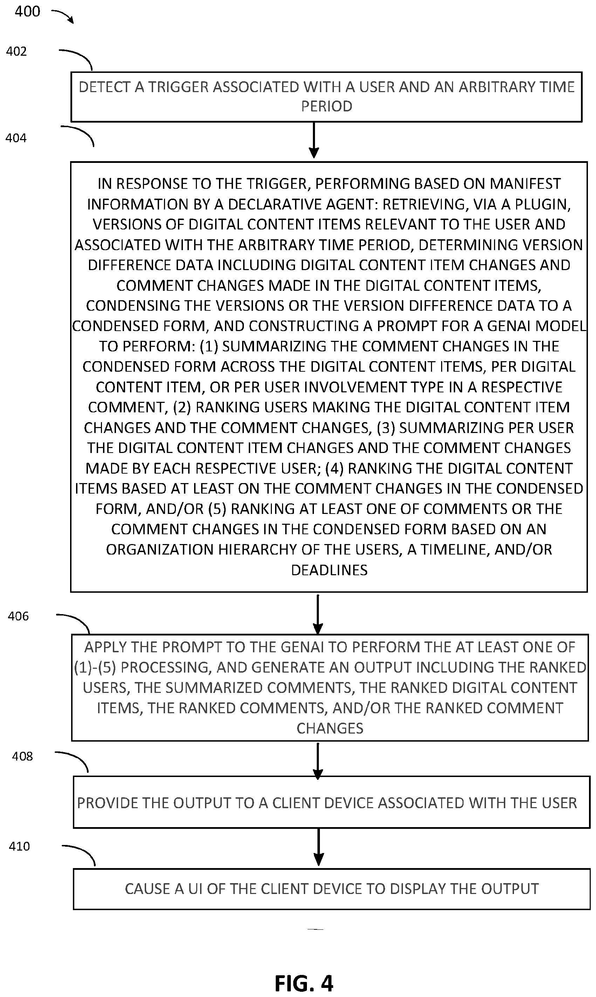

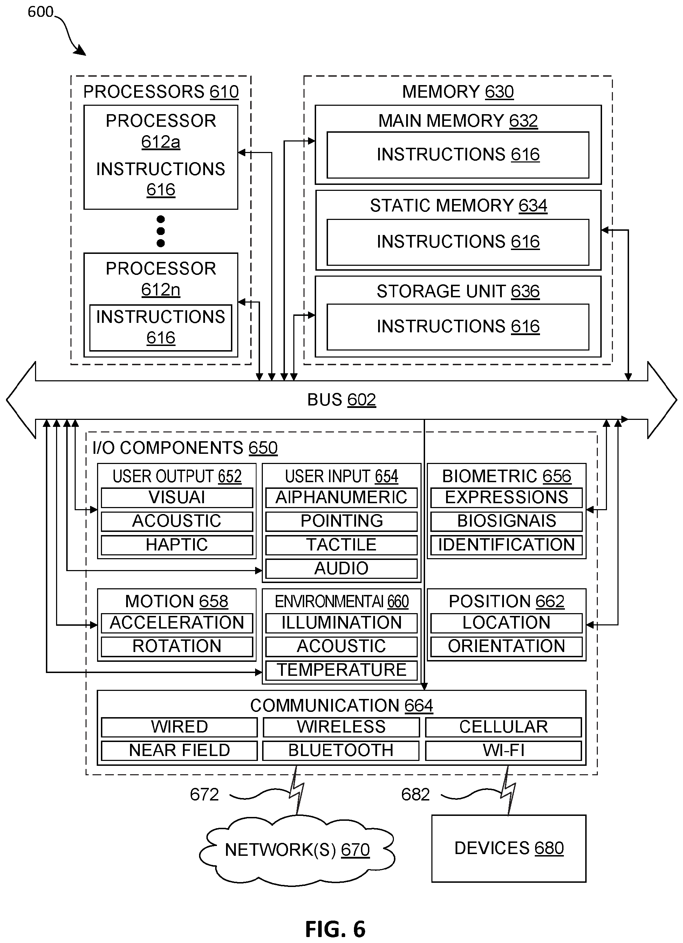

FIG. 4 is a flow chart of an example process for generating AI-based collaboration catch-ups for files relevant to a user according to the techniques disclosed herein. The process 400 can be implemented by the computing environment 100 or its components shown in the preceding examples. The process 400 may be implemented in, for instance, the example machine including a processor and a memory as shown in FIG. 6. As such, the computing environment 100 can provide means for accomplishing various parts of the process 400, as well as means for accomplishing embodiments of other processes described herein in conjunction with other components of the computing environment 100. Although the process 400 is illustrated and described as a sequence of steps, it is contemplated that various embodiments of the process 400 may be performed in any order or combination and need not include all the illustrated steps.

In one embodiment, for example, in step 402, a client device (e.g., the entity agent device 120a) and/or a request processing unit (e.g., the request processing unit 111) detects a triggering criterion associated with a user and a pair of arbitrary time points. For example, the triggering criterion includes a pre-defined monitoring trigger, a pre-defined subscription trigger, or a user interaction with one of a plurality of digital content items relevant to the user or a user interaction with an AI agent (e.g., the AI agent 105) within an user interface (e.g., the user interface 305) at the client device associated with the user. For instance, the digital content items include at least one of a document, a spreadsheet, a presentation, a form, a diagram, a note, a website, an email, a group chat, an audio meeting, a video meeting, a collaboration channel chat, a calendar, a database, or a whiteboard.

In response to the triggering criterion, in step 404, a declarative agent (e.g., the collab catch-up agent 110) performs based on manifest information operations of: retrieving, via a plugin (e.g., the collaboration catch-up plugin 110a), versions of the plurality of digital content items relevant to the user and associated with the pair of arbitrary time points, determining version difference data including digital content item changes and comment changes made in the digital content items ("Diff" function), condensing the versions of the digital content items or the version difference data from a current form to a condensed form, and constructing a prompt (e.g.. the prompt in Table 7) for a generative artificial intelligence (AI) model (e.g., the LLM 115a-1) to perform at least one of (1)-(5) processing. The manifest information specifying a configuration of the declarative agent with required fields and capabilities corresponding to the (1)-(5) processing, and a configuration of the plugin with required fields and capabilities corresponding to retrieving the versions.

The (1) processing is summarizing the comment changes in the condensed form across the digital content items, per digital content item, or per user involvement type in a respective comment. For example, a user involvement type in a respective comment is giving a task, being an author, directly mentioned, replied to, assigned a task, acknowledged expertise, acknowledged contribution, acknowledged approval, or invited for input. The (2) processing is ranking users making the digital content item changes and the comment changes. The (3) processing is summarizing per user the digital content item changes and the comment changes made by each respective user. The (4) processing is ranking the digital content items based at least on the comment changes in the condensed form. The (5) processing is ranking at least one of comments in the digital content items or the comment changes in the condensed form based on at least one of an organization hierarchy of the users, a timeline, or deadlines. For example, the declarative agent queries a graph database (e.g., the relationship graph database 118c) to determine the organization hierarchy of the users.

In step 406, the AI agent 105 applies the prompt to the generative AI model to perform the at least one of (1)-(5) processing, and generate an output including at least one of the ranked users (e.g., A, B, C in the window 204 in FIG. 2A), the summarized comments (e.g., "GameS Pricing: Discussed uncertainty about the pricing for the upcoming Nintendo Switch release due to tariffs." in the window 325d in FIG. 3C), the ranked digital content items (e.g., the documents 1-4 in the chat box 202 in FIG. 2A), the ranked comments (e.g., "GameS Pricing," "Bicycle Capital," and "Guest User Content" in the window 325d in FIG. 3C), or the ranked comment changes. In other implementations, the summarization unit 113 and/or the ranking unit 114, i.e., custom-made mixtures of hardware and software, perform the at least one of (1)-(5) processing.

The Diff function (i.e., determining version difference data) is performed by the collab catch-up agent 110 which is a declarative agent, a rule-based AI agent. The collab catch-up agent 110 runs the Diff function on generic computing devices. In other implementations, the diff unit 112, i.e., a custom-made mixture of hardware and software, performs the Diff function.

In some implementations, the condensing includes at least one of skipping media from the versions, zipping the versions, a chunking and stamping strategy, or converting the versions or the version difference data from a current format to a simpler format. In this case, the condensing is performed by the collab catch-up agent 110 on generic computing devices. In other implementations, the condensing is preformed by the condensing unit 115, i.e., a custom-made mixture of hardware and software. For example, the condensing includes converting the versions or the version difference data from a current format to a simpler format, the current format is open extensible markup language, and the simpler format is intermediate representation (IR). If one of the digital content items has a non-text element (e.g., table, equation, image, and the like), the declarative agent preserves the non-text element and one or more properties of the non-text element in the IR, when at least one of the non-text element and the one or more properties was changed. The at least one of (1)-(5) processing is performed on the IR.

In another implementation, if one of the digital content items has a sensitivity label, the declarative agent uses a shredder service (e.g., the shredder service 102a) to fetch versions of the digital content item with the sensitivity label, and receives decrypted versions of the digital content item. For example, the sensitivity label is confidential, internal, or private. The at least one of (1)-(5) processing is performed on the decrypted versions.

In another implementation, if one of the digital content items has media content, the declarative agent extracts text data from versions of the digital content item, and hashes the media content in the versions of the digital content item into media hash while excluding the media content. The at least one of (1)-(5) processing is performed on the text data and the media hash.

In another implementation, if one of the digital content items is a spreadsheet, the declarative agent retrieves a latest file and revision-log stream data of the spreadsheet, and extracts version difference data of the spreadsheet based on the latest file and the revision-log stream data. The at least one of (1)-(5) processing is performed on the version difference data of the spreadsheet.

In step 408, the AI agent 105 provides the output to a client device associated with the user. In step 410, the AI agent 105 causes a user interface of the client device to display the output

All the above-discussed telemetry data and cloud data, user digital content item data, IR data, relationship graph database, Diff and summary data, model training data and attributes, and the like can be stored in the data storage 118. The data storage 118 can be physical and/or virtual, depending on the entity's needs and IT infrastructure. Examples of physical data storage systems include network-attached storage (NAS), storage area network (SAN), direct-attached storage (DAS), tape libraries, hybrid storage arrays, object storage, and the like. Examples of virtual data storage systems include virtual SAN (vSAN), software-defined storage (SDS), cloud storage, hyper-converged Infrastructure (HCI), network virtualization and software-defined networking (SDN), container storage, and the like.

In an example, the computing environment 100 can store the system data separately from software development data, to reduce the risk of unintentionally leaking sensitive information. The computing environment 100 can limit access to the software development data and the system data. The computing environment 100 can also implement proper access controls, strong authentication, and authorization mechanisms to ensure that only authorized personnel can interact with the software development data and the system data.

The computing environment 100 can also run the collaboration catch-up approach in a secure computing environment. Moreover, the computing environment 100 can employ robust network security, firewalls, and intrusion detection systems to protect against external threats. The computing environment 100 can encrypt the system data and any data in transit. The computing environment 100 can also employ encryption standards for data storage and data transmission to safeguard against data breaches.

Moreover, the computing environment 100 can implement strong security measures around the collaboration catch-up approach itself, such as regular security audits, code reviews, and ensuring that the disabled test file is up-to-date. The computing environment 100 can periodically audit the collaboration catch-up approach's usage and access logs, to detect any unauthorized or anomalous activities. The computing environment 100 can also ensure that any use of the collaboration catch-up approach complies with relevant data protection regulations such as GDPR, HIPAA, or other industry-specific compliance standards.

The detailed examples of systems, devices, and techniques described in connection with FIGS. 1-4 are presented herein for illustration of the disclosure and its benefits. Such examples of use should not be construed to be limitations on the logical process embodiments of the disclosure, nor should variations of user interface methods from those described herein be considered outside the scope of the present disclosure. It is understood that references to displaying or presenting an item (such as, but not limited to, presenting an image on a display device, presenting audio via one or more loudspeakers, and/or vibrating a device) include issuing instructions, commands, and/or signals causing, or reasonably expected to cause, a device or system to display or present the item. In some embodiments, various features described in FIGS. 1-4 are implemented in respective modules, which may also be referred to as, and/or include, logic, components, units, and/or mechanisms. Modules may constitute either software modules (for example, code embodied on a machine-readable medium) or hardware modules.

In some examples, a hardware module may be implemented mechanically, electronically, or with any suitable combination thereof. For example, a hardware module may include dedicated circuitry or logic that is configured to perform certain operations. For example, a hardware module may include a special-purpose processor, such as a field-programmable gate array (FPGA) or an Application Specific Integrated Circuit (ASIC). A hardware module may also include programmable logic or circuitry that is temporarily configured by software to perform certain operations and may include a portion of machine-readable medium data and/or instructions for such configuration. For example, a hardware module may include software encompassed within a programmable processor configured to execute a set of software instructions. It will be appreciated that the decision to implement a hardware module mechanically, in dedicated and permanently configured circuitry, or in temporarily configured circuitry (for example, configured by software) may be driven by cost, time, support, and engineering considerations.

Accordingly, the phrase "hardware module" should be understood to encompass a tangible entity capable of performing certain operations and may be configured or arranged in a certain physical manner, be that an entity that is physically constructed, permanently configured (for example, hardwired), and/or temporarily configured (for example, programmed) to operate in a certain manner or to perform certain operations described herein. As used herein, "hardware-implemented module" refers to a hardware module. Considering examples in which hardware modules are temporarily configured (for example, programmed), each of the hardware modules need not be configured or instantiated at any one instance in time. For example, where a hardware module includes a programmable processor configured by software to become a special-purpose processor, the programmable processor may be configured as respectively different special-purpose processors (for example, including different hardware modules) at different times. Software may accordingly configure a processor or processors, for example, to constitute a particular hardware module at one instance of time and to constitute a different hardware module at a different instance of time. A hardware module implemented using one or more processors may be referred to as being "processor implemented" or "computer implemented."

Hardware modules can provide information to, and receive information from, other hardware modules. Accordingly, the described hardware modules may be regarded as being communicatively coupled. Where multiple hardware modules exist contemporaneously, communications may be achieved through signal transmission (for example, over appropriate circuits and buses) between or among two or more of the hardware modules. In embodiments in which multiple hardware modules are configured or instantiated at different times, communications between such hardware modules may be achieved, for example, through the storage and retrieval of information in memory devices to which the multiple hardware modules have access. For example, one hardware module may perform an operation and store the output in a memory device, and another hardware module may then access the memory device to retrieve and process the stored output.

In some examples, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by, and/or among, multiple computers (as examples of machines including processors), with these operations being accessible via a network (for example, the Internet) and/or via one or more software interfaces (for example, an application program interface (API)). The performance of certain of the operations may be distributed among the processors, not only residing within a single machine, but deployed across several machines. Processors or processor-implemented modules may be in a single geographic location (for example, within a home or office environment, or a server farm), or may be distributed across multiple geographic locations.

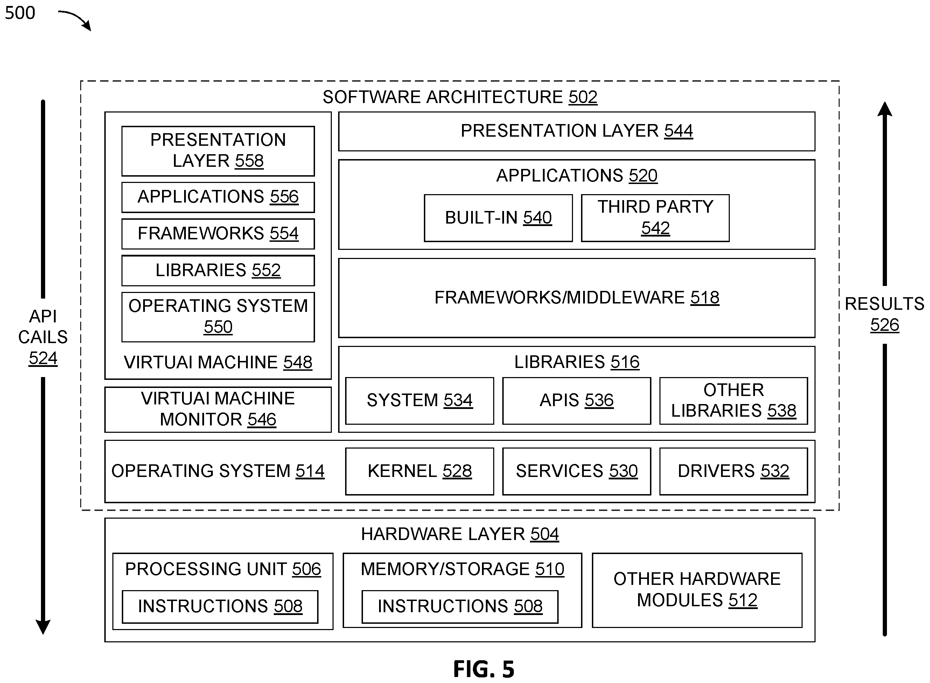

FIG. 5 is a block diagram 500 illustrating an example software architecture 502, various portions of which may be used in conjunction with various hardware architectures herein described, which may implement any of the above-described features. FIG. 5 is a nonlimiting example of a software architecture, and it will be appreciated that many other architectures may be implemented to facilitate the functionality described herein. The software architecture 502 may execute on hardware such as a machine 600 of FIG. 6 that includes, among other things, processors 610, memory 630, and input/output (I/O) components 650. A representative hardware layer 504 is illustrated and can represent, for example, the machine 600 of FIG. 6. The representative hardware layer 504 includes a processing unit 506 and associated executable instructions 508. The executable instructions 508 represent executable instructions of the software architecture 502, including implementation of the methods, modules and so forth described herein. The hardware layer 504 also includes a memory/storage 510, which also includes the executable instructions 508 and accompanying data. The hardware layer 504 may also include other hardware modules 512. Instructions 508 held by processing unit 506 may be portions of instructions 508 held by the memory/storage 510.

The example software architecture 502 may be conceptualized as layers, each providing various functionality. For example, the software architecture 502 may include layers and components such as an operating system (OS) 514, libraries 516, frameworks 518, applications 520, and a presentation layer 544. Operationally, the applications 520 and/or other components within the layers may invoke API calls 524 to other layers and receive corresponding results 526. The layers illustrated are representative in nature and other software architectures may include additional or different layers. For example, some mobile or special purpose operating systems may not provide the frameworks/middleware 518.

The OS 514 may manage hardware resources and provide common services. The OS 514 may include, for example, a kernel 528, services 530, and drivers 532. The kernel 528 may act as an abstraction layer between the hardware layer 504 and other software layers. For example, the kernel 528 may be responsible for memory management, processor management (for example, scheduling), component management, networking, security settings, and so on. The services 530 may provide other common services for the other software layers. The drivers 532 may be responsible for controlling or interfacing with the underlying hardware layer 504. For instance, the drivers 532 may include display drivers, camera drivers, memory/storage drivers, peripheral device drivers (for example, via Universal Serial Bus (USB)), network and/or wireless communication drivers, audio drivers, and so forth depending on the hardware and/or software configuration.

The libraries 516 may provide a common infrastructure that may be used by the applications 520 and/or other components and/or layers. The libraries 516 typically provide functionality for use by other software modules to perform tasks, rather than interacting directly with the OS 514. The libraries 516 may include system libraries 534 (for example, C standard library) that may provide functions such as memory allocation, string manipulation, file operations. In addition, the libraries 516 may include API libraries 536 such as media libraries (for example, supporting presentation and manipulation of image, sound, and/or video data formats), graphics libraries (for example, an OpenGL library for rendering 2D and 3D graphics on a display), database libraries (for example, SQLite or other relational database functions), and web libraries (for example, WebKit that may provide web browsing functionality). The libraries 516 may also include a wide variety of other libraries 538 to provide many functions for applications 520 and other software modules.

The frameworks 518 (also sometimes referred to as middleware) provide a higher-level common infrastructure that may be used by the applications 520 and/or other software modules. For example, the frameworks 518 may provide various graphic user interface (GUI) functions, high-level resource management, or high-level location services. The frameworks 518 may provide a broad spectrum of other APIs for applications 520 and/or other software modules.

The applications 520 include built-in applications 540 and/or third-party applications 542. Examples of built-in applications 540 may include, but are not limited to, a contacts application, a browser application, a location application, a media application, a messaging application, and/or a game application. Third-party applications 542 may include any applications developed by an entity other than the vendor of the particular platform. The applications 520 may use functions available via OS 514, libraries 516, frameworks 518, and presentation layer 544 to create user interfaces to interact with users.

Some software architectures use virtual machines, as illustrated by a virtual machine 548. The virtual machine 548 provides an execution environment where applications/modules can execute as if they were executing on a hardware machine (such as the machine 600 of FIG. 6, for example). The virtual machine 548 may be hosted by a host OS (for example, OS 514) or hypervisor, and may have a virtual machine monitor 546 which manages operation of the virtual machine 548 and interoperation with the host operating system. A software architecture, which may be different from software architecture 502 outside of the virtual machine, executes within the virtual machine 548 such as an OS 550, libraries 552, frameworks 554, applications 556, and/or a presentation layer 558.

FIG. 6 is a block diagram illustrating components of an example machine 600 configured to read instructions from a machine-readable medium (for example, a machine-readable storage medium) and perform any of the features described herein. The example machine 600 is in a form of a computer system, within which instructions 616 (for example, in the form of software components) for causing the machine 600 to perform any of the features described herein may be executed. As such, the instructions 616 may be used to implement modules or components described herein. The instructions 616 cause unprogrammed and/or unconfigured machine 600 to operate as a particular machine configured to carry out the described features. The machine 600 may be configured to operate as a standalone device or may be coupled (for example, networked) to other machines. In a networked deployment, the machine 600 may operate in the capacity of a server machine or a client machine in a server-client network environment, or as a node in a peer-to-peer or distributed network environment. Machine 600 may be embodied as, for example, a server computer, a client computer, a personal computer (PC), a tablet computer, a laptop computer, a netbook, a set-top box (STB), a gaming and/or entertainment system, a smart phone, a mobile device, a wearable device (for example, a smart watch), and an Internet of Things (IoT) device. Further, although only a single machine 600 is illustrated, the term "machine" includes a collection of machines that individually or jointly execute the instructions 616.

The machine 600 may include processors 610, memory 630, and I/O components 650, which may be communicatively coupled via, for example, a bus 602. The bus 602 may include multiple buses coupling various elements of machine 600 via various bus technologies and protocols. In an example, the processors 610 (including, for example, a central processing unit (CPU), a graphics processing unit (GPU), a neural processing unit (NPU), a digital signal processor (DSP), an ASIC, or a suitable combination thereof) may include one or more processors 612a to 612n that may execute the instructions 616 and process data. In some examples, one or more processors 610 may execute instructions provided or identified by one or more other processors 610. The term "processor" includes a multi-core processor including cores that may execute instructions contemporaneously. Although FIG. 6 shows multiple processors, the machine 600 may include a single processor with a single core, a single processor with multiple cores (for example, a multi-core processor), multiple processors each with a single core, multiple processors each with multiple cores, or any combination thereof. In some examples, the machine 600 may include multiple processors distributed among multiple machines.

The memory/storage 630 may include a main memory 632, a static memory 634, or other memory, and a storage unit 636, both accessible to the processors 610 such as via the bus 602. The storage unit 636 and memory 632, 634 store instructions 616 embodying any one or more of the functions described herein. The memory/storage 630 may also store temporary, intermediate, and/or long-term data for processors 610. The instructions 616 may also reside, completely or partially, within the memory 632, 634, within the storage unit 636, within at least one of the processors 610 (for example, within a command buffer or cache memory), within memory at least one of I/O components 650, or any suitable combination thereof, during execution thereof. Accordingly, the memory 632, 634, the storage unit 636, memory in processors 610, and memory in I/O components 650 are examples of machine-readable media.

As used herein, "machine-readable medium" refers to a device able to temporarily or permanently store instructions and data that cause machine 600 to operate in a specific fashion, and may include, but is not limited to, random-access memory (RAM), read-only memory (ROM), buffer memory, flash memory, optical storage media, magnetic storage media and devices, cache memory, network-accessible or cloud storage, other types of storage and/or any suitable combination thereof. The term "machine-readable medium" applies to a single medium, or combination of multiple media, used to store instructions (for example, instructions 616) for execution by a machine 600 such that the instructions, when executed by one or more processors 610 of the machine 600, cause the machine 600 to perform and one or more of the features described herein. Accordingly, a "machine-readable medium" may refer to a single storage device, as well as "cloud-based" storage systems or storage networks that include multiple storage apparatus or devices. The term "machine-readable medium" excludes signals per se.

The I/O components 650 may include a wide variety of hardware components adapted to receive input, provide output, produce output, transmit information, exchange information, capture measurements, and so on. The specific I/O components 650 included in a particular machine will depend on the type and/or function of the machine. For example, mobile devices such as mobile phones may include a touch input device, whereas a headless server or IoT device may not include such a touch input device. The particular examples of I/O components illustrated in FIG. 6 are in no way limiting, and other types of components may be included in machine 600. The grouping of I/O components 650 are merely for simplifying this discussion, and the grouping is in no way limiting. In various examples, the I/O components 650 may include user output components 652 and user input components 654. User output components 652 may include, for example, display components for displaying information (for example, a liquid crystal display (LCD) or a projector), acoustic components (for example, speakers), haptic components (for example, a vibratory motor or force-feedback device), and/or other signal generators. User input components 654 may include, for example, alphanumeric input components (for example, a keyboard or a touch screen), pointing components (for example, a mouse device, a touchpad, or another pointing instrument), and/or tactile input components (for example, a physical button or a touch screen that provides location and/or force of touches or touch gestures) configured for receiving various user inputs, such as user commands and/or selections.

In some examples, the I/O components 650 may include biometric components 656, motion components 658, environmental components 660, and/or position components 662, among a wide array of other physical sensor components. The biometric components 656 may include, for example, components to detect body expressions (for example, facial expressions, vocal expressions, hand or body gestures, or eye tracking), measure biosignals (for example, heart rate or brain waves), and identify a person (for example, via voice-, retina-, fingerprint-, and/or facial-based identification). The motion components 658 may include, for example, acceleration sensors (for example, an accelerometer) and rotation sensors (for example, a gyroscope). The environmental components 660 may include, for example, illumination sensors, temperature sensors, humidity sensors, pressure sensors (for example, a barometer), acoustic sensors (for example, a microphone used to detect ambient noise), proximity sensors (for example, infrared sensing of nearby objects), and/or other components that may provide indications, measurements, or signals corresponding to a surrounding physical environment. The position components 662 may include, for example, location sensors (for example, a Global Position System (GPS) receiver), altitude sensors (for example, an air pressure sensor from which altitude may be derived), and/or orientation sensors (for example, magnetometers).

The I/O components 650 may include communication components 664, implementing a wide variety of technologies operable to couple the machine 600 to network(s) 670 and/or device(s) 680 via respective communicative couplings 672 and 682. The communication components 664 may include one or more network interface components or other suitable devices to interface with the network(s) 670. The communication components 664 may include, for example, components adapted to provide wired communication, wireless communication, cellular communication, Near Field Communication (NFC), Bluetooth communication, Wi-Fi, and/or communication via other modalities. The device(s) 680 may include other machines or various peripheral devices (for example, coupled via USB).

In some examples, the communication components 664 may detect identifiers or include components adapted to detect identifiers. For example, the communication components 664 may include Radio Frequency Identification (RFID) tag readers, NFC detectors, optical sensors (for example, one- or multi-dimensional bar codes, or other optical codes), and/or acoustic detectors (for example, microphones to identify tagged audio signals). In some examples, location information may be determined based on information from the communication components 664, such as, but not limited to, geo-location via Internet Protocol (IP) address, location via Wi-Fi, cellular, NFC, Bluetooth, or other wireless station identification and/or signal triangulation.

In the preceding detailed description, numerous specific details are set forth by way of examples in order to provide a thorough understanding of the relevant teachings. However, it should be apparent that the present teachings may be practiced without such details. In other instances, well known methods, procedures, components, and/or circuitry have been described at a relatively high-level, without detail, in order to avoid unnecessarily obscuring aspects of the present teachings.

Described herein is a data processing system in response to a trigger, performing based on manifest information by a declarative agent: retrieving, via a plugin, versions of digital content items (DCTs) relevant to a user and associated with a time period, determining version difference data including DCT and comment changes made in the DCTs, condensing the versions or the version difference data to a condensed form, and constructing a prompt for a GenAI model to perform: (1) summarizing the comment changes across the DCTs, (2) ranking users making the DCT/comment changes, (3) summarizing per user the DCT/comment changes; (4) ranking the DCTs based on the comment changes, and/or (5) ranking comments and/or the comment changes based on an organization hierarchy of the users; applying the prompt to the GenAI to perform at least one of (1)-(5) processing and generate an output; and providing the output to a client device.

The following summary provides a set of illustrative examples of the technology set forth herein.

Clause A. A data processing system comprising: a processor; and a machine-readable storage medium storing executable instructions that, when executed, cause the processor alone or in combination with other processors to perform operations of: detecting a triggering criterion associated with a user and a pair of arbitrary time points; in response to the triggering criterion, performing based on manifest information by a declarative agent operations of: retrieving, via a plugin, versions of a plurality of digital content items relevant to the user and associated with the pair of arbitrary time points, determining version difference data including digital content item changes and comment changes made in the digital content items, condensing the versions of the digital content items or the version difference data from a current form to a condensed form, and constructing a prompt for a generative artificial intelligence (AI) model to perform at least one of: (1) summarizing the comment changes in the condensed form across the digital content items, per digital content item, or per user involvement type in a respective comment, (2) ranking users making the digital content item changes and the comment changes, (3) summarizing per user the digital content item changes and the comment changes made by each respective user; (4) ranking the digital content items based at least on the comment changes in the condensed form, and (5) ranking at least one of comments in the digital content items or the comment changes in the condensed form based on at least one of an organization hierarchy of the users, a timeline, or deadlines; applying the prompt to the generative AI model to perform the at least one of (1)-(5) processing, and generate an output including at least one of the ranked users, the summarized comments, the ranked digital content items, the ranked comments, or the ranked comment changes; providing the output to a client device associated with the user; and causing a user interface of the client device to display the output, wherein the manifest information specifying a configuration of the declarative agent with required fields and capabilities corresponding to the (1)-(5) processing, and a configuration of the plugin with required fields and capabilities corresponding to retrieving the versions.

Clause B. The data processing system of clause A, wherein the triggering criterion includes a pre-defined monitoring trigger, a pre-defined subscription trigger, or a user interaction with one of the digital content items or an AI agent within the user interface at the client device.

Clause C. The data processing system of clause A or clause B, wherein the machine-readable storage medium further includes instructions configured to cause the processor alone or in combination with other processors to perform: querying a graph database to determine the organization hierarchy of the users.

Clause D. The data processing system of any of clauses A to C, wherein the condensing includes at least one of skipping media from the versions, zipping the versions, a chunking and stamping strategy, or converting the versions or the version difference data from a current format to a simpler format.

Clause E. The data processing system of any of clauses A to D, wherein the condensing includes converting the versions or the version difference data from a current format to a simpler format, the current format is open extensible markup language, and the simpler format is intermediate representation (IR).

Clause F. The data processing system of any of clauses A to E, wherein one of the digital content items has a non-text element, and the machine-readable storage medium further includes instructions configured to cause the processor alone or in combination with other processors to perform: preserving the non-text element and one or more properties of the non-text element in the IR, when at least one of the non-text element and the one or more properties was changed, wherein the at least one of (1)-(5) processing is performed on the IR.

Clause G. The data processing system of any of clauses A to F, wherein one of the digital content items has a sensitivity label, and the machine-readable storage medium further includes instructions configured to cause the processor alone or in combination with other processors to perform: using a shredder service to fetch versions of the digital content item with the sensitivity label; and receiving decrypted versions of the digital content item, wherein the at least one of (1)-(5) processing is performed on the decrypted versions.

Clause H. The data processing system of any of clauses A to G, wherein the sensitivity label is confidential, internal, or private.

Clause I. The data processing system of any of clauses A to H, wherein one of the digital content items has media content, and the machine-readable storage medium further includes instructions configured to cause the processor alone or in combination with other processors to perform: extracting text data from versions of the digital content item; and hashing the media content in the versions of the digital content items into media hash while excluding the media content, wherein the at least one of (1)-(5) processing is performed on the text data and the media hash.

Clause J. The data processing system of any of clauses A to I, wherein one of the digital content items is a spreadsheet, and the machine-readable storage medium further includes instructions configured to cause the processor alone or in combination with other processors to perform: retrieving a latest file and revision-log stream data of the spreadsheet; and extracting version difference data of the spreadsheet based on the latest file and the revision-log stream data, wherein the at least one of (1)-(5) processing is performed on the version difference data of the spreadsheet.

Clause K. The data processing system of any of clauses A to J, wherein a user involvement type in a respective comment is giving a task, being an author, directly mentioned, replied to, assigned a task, acknowledged expertise, acknowledged contribution, acknowledged approval, or invited for input.

Clause L. The data processing system of any of clauses A to K, wherein the digital content items include at least one of a document, a spreadsheet, a presentation, a form, a diagram, a note, a website, an email, a group chat, an audio meeting, a video meeting, a collaboration channel chat, a calendar, a database, or a whiteboard.

Clause M. A method comprising: detecting a triggering criterion associated with a user and a pair of arbitrary time points; in response to the triggering criterion, performing based on manifest information by a declarative agent operations of: retrieving, via a plugin, versions of a plurality of digital content items relevant to the user and associated with the pair of arbitrary time points, determining version difference data including digital content item changes and comment changes made in the digital content items, condensing the versions of the digital content items or the version difference data from a current form to a condensed form, and constructing a prompt for a generative artificial intelligence (AI) model to perform at least one of: (1) summarizing the comment changes in the condensed form across the digital content items, per digital content item, or per user involvement type in a respective comment, (2) ranking users making the digital content item changes and the comment changes, (3) summarizing per user the digital content item changes and the comment changes made by each respective user; (4) ranking the digital content items based at least on the comment changes in the condensed form, and (5) ranking at least one of comments in the digital content items or the comment changes in the condensed form based on at least one of an organization hierarchy of the users, a timeline, or deadlines; applying the prompt to the generative AI model to perform the at least one of (1)-(5) processing, and generate an output including at least one of the ranked users, the summarized comments, the ranked digital content items, the ranked comments, or the ranked comment changes; providing the output to a client device associated with the user; and causing a user interface of the client device to display the output, wherein the manifest information specifying a configuration of the declarative agent with required fields and capabilities corresponding to the (1)-(5) processing, and a configuration of the plugin with required fields and capabilities corresponding to retrieving the versions.

Clause N. The method of clause M, wherein the triggering criterion includes a pre-defined monitoring trigger, a pre-defined subscription trigger, or a user interaction with one of the digital content items or an AI agent within the user interface at the client device.

Clause O. The method of clause M or clause N, further comprising: querying a graph database to determine the organization hierarchy of the users.

Clause P. The method of any of clauses M to O, wherein the condensing includes at least one of skipping media from the versions, zipping the versions, a chunking and stamping strategy, or converting the versions or the version difference data from a current format to a simpler format.

Clause Q. A non-transitory computer readable medium on which are stored instructions that, when executed, cause a programmable device to perform functions of: detecting a triggering criterion associated with a user and a pair of arbitrary time points; in response to the triggering criterion, performing based on manifest information by a declarative agent operations of: retrieving, via a plugin, versions of a plurality of digital content items relevant to the user and associated with the pair of arbitrary time points, determining version difference data including digital content item changes and comment changes made in the digital content items, condensing the versions of the digital content items or the version difference data from a current form to a condensed form, and constructing a prompt for a generative artificial intelligence (AI) model to perform at least one of: (1) summarizing the comment changes in the condensed form across the digital content items, per digital content item, or per user involvement type in a respective comment, (2) ranking users making the digital content item changes and the comment changes, (3) summarizing per user the digital content item changes and the comment changes made by each respective user; (4) ranking the digital content items based at least on the comment changes in the condensed form, and (5) ranking at least one of comments in the digital content items or the comment changes in the condensed form based on at least one of an organization hierarchy of the users, a timeline, or deadlines; applying the prompt to the generative AI model to perform the at least one of (1)-(5) processing, and generate an output including at least one of the ranked users, the summarized comments, the ranked digital content items, the ranked comments, or the ranked comment changes; providing the output to a client device associated with the user; and causing a user interface of the client device to display the output, wherein the manifest information specifying a configuration of the declarative agent with required fields and capabilities corresponding to the (1)-(5) processing, and a configuration of the plugin with required fields and capabilities corresponding to retrieving the versions.

Clause R. The non-transitory computer readable medium of clause Q, wherein the triggering criterion includes a pre-defined monitoring trigger, a pre-defined subscription trigger, or a user interaction with one of the digital content items or an AI agent within the user interface at the client device.

Clause S. The non-transitory computer readable medium of clause Q or clause R, wherein the instructions when executed, further cause the programmable device to perform: querying a graph database to determine the organization hierarchy of the users.

Clause T. The non-transitory computer readable medium of any of clauses Q to S, wherein the condensing includes at least one of skipping media from the versions, zipping the versions, a chunking and stamping strategy, or converting the versions or the version difference data from a current format to a simpler format.

While various embodiments have been described, the description is intended to be exemplary, rather than limiting, and it is understood that many more embodiments and implementations are possible that are within the scope of the embodiments. Although many possible combinations of features are shown in the accompanying figures and discussed in this detailed description, many other combinations of the disclosed features are possible. Any feature of any embodiment may be used in combination with or substituted for any other feature or element in any other embodiment unless specifically restricted. Therefore, it will be understood that any of the features shown and/or discussed in the present disclosure may be implemented together in any suitable combination. Accordingly, the embodiments are not to be restricted except in light of the attached claims and their equivalents. Also, various modifications and changes may be made within the scope of the attached claims.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a" or "an" does not, without further constraints, preclude the existence of additional identical elements in the process, method, article, or apparatus that comprises the element. Furthermore, subsequent limitations referring back to "said element" or "the element" performing certain functions signifies that "said element" or "the element" alone or in combination with additional identical elements in the process, method, article, or apparatus are capable of performing all of the recited functions.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that the claims require more features than are expressly recited in each claim. Rather, as the following claims reflect, inventive subject matter lies in less than all features of a single disclosed example. Thus, the following claims are hereby incorporated into the Detailed Description, with each claim standing on its own as a separately claimed subject matter.

## Claims

1. A data processing system (600) comprising:
a processor (610); and
a machine-readable storage medium (630) in communication with the processor, the memory comprising executable instructions (616) that, when executed by the processor, cause the data processing system to perform operations of:
detecting a triggering criterion associated with a user and a pair of arbitrary time points;
in response to the triggering criterion, performing based on manifest information by a declarative agent (110) operations of:
retrieving, via a plugin (110a), versions of a plurality of digital content items relevant to the user and associated with the pair of arbitrary time points,
determining version difference data including digital content item changes and comment changes made in the digital content items,
condensing the versions of the digital content items or the version difference data from a current form to a condensed form, and
constructing a prompt for a generative artificial intelligence, AI, model (115a-1) to perform at least one of:
(1) summarizing the comment changes in the condensed form across the digital content items, per digital content item, or per user involvement type in a respective comment,
(2) ranking users making the digital content item changes and the comment changes,
(3) summarizing per user the digital content item changes and the comment changes made by each respective user;
(4) ranking the digital content items based at least on the comment changes in the condensed form, and
(5) ranking at least one of comments in the digital content items or the comment changes in the condensed form based on at least one of an organization hierarchy of the users, a timeline, or deadlines;
applying the prompt to the generative AI model to perform the at least one of (1)-(5) processing, and generate an output including at least one of the ranked users, the summarized comments, the ranked digital content items, the ranked comments, or the ranked comment changes;
providing the output to a client device (120a) associated with the user; and
causing a user interface (305) of the client device to display the output,
wherein the manifest information specifying a configuration of the declarative agent with required fields and capabilities corresponding to the (1)-(5) processing, and a configuration of the plugin with required fields and capabilities corresponding to retrieving the versions.

2. The data processing system of claim 1, wherein the triggering criterion includes a pre-defined monitoring trigger, a pre-defined subscription trigger, or a user interaction with one of the digital content items or an AI agent (105) within the user interface at the client device.

3. The data processing system of any of claim 1 or claim 2, wherein the machine-readable storage medium further includes instructions configured to cause the processor alone or in combination with other processors to perform:
querying a graph database (118c) to determine the organization hierarchy of the users.

4. The data processing system of any of claims 1-3, wherein the condensing includes at least one of skipping media from the versions, zipping the versions, a chunking and stamping strategy, or converting the versions or the version difference data from a current format to a simpler format.

5. The data processing system of any of claims 1-4, wherein the condensing includes converting the versions or the version difference data from a current format to a simpler format, the current format is open extensible markup language, and the simpler format is intermediate representation ,IR.

6. The data processing system of any of claims 1-5, wherein one of the digital content items has a non-text element, and the machine-readable storage medium further includes instructions configured to cause the processor alone or in combination with other processors to perform:
preserving the non-text element and one or more properties of the non-text element in the IR, when at least one of the non-text element and the one or more properties was changed,
wherein the at least one of (1)-(5) processing is performed on the IR.

7. The data processing system of any of claims 1-6, wherein one of the digital content items has a sensitivity label, and the machine-readable storage medium further includes instructions configured to cause the processor alone or in combination with other processors to perform:
using a shredder service (102a) to fetch versions of the digital content item with the sensitivity label; and
receiving decrypted versions of the digital content item, wherein the at least one of (1)-(5) processing is performed on the decrypted versions.

8. The data processing system of any of claims 1-7, wherein the sensitivity label is confidential, internal, or private.

9. The data processing system of any of claims 1-8, wherein one of the digital content items has media content, and the machine-readable storage medium further includes instructions configured to cause the processor alone or in combination with other processors to perform:
extracting text data from versions of the digital content item; and
hashing the media content in the versions of the digital content items into media hash while excluding the media content,
wherein the at least one of (1)-(5) processing is performed on the text data and the media hash.

10. The data processing system of any of claims 1-9, wherein one of the digital content items is a spreadsheet, and the machine-readable storage medium further includes instructions configured to cause the processor alone or in combination with other processors to perform:
retrieving a latest file and revision-log stream data of the spreadsheet; and
extracting version difference data of the spreadsheet based on the latest file and the revision-log stream data,
wherein the at least one of (1)-(5) processing is performed on the version difference data of the spreadsheet.

11. The data processing system of any of claims 1-10, wherein a user involvement type in a respective comment is giving a task, being an author, directly mentioned, replied to, assigned a task, acknowledged expertise, acknowledged contribution, acknowledged approval, or invited for input.

12. The data processing system of any of claims 1-11, wherein the digital content items include at least one of a document, a spreadsheet, a presentation, a form, a diagram, a note, a website, an email, a group chat, an audio meeting, a video meeting, a collaboration channel chat, a calendar, a database, or a whiteboard.

13. A method comprising:
detecting a triggering criterion associated with a user and a pair of arbitrary time points;
in response to the triggering criterion, performing based on manifest information by a declarative agent (110) operations of:
retrieving, via a plugin (110a), versions of a plurality of digital content items relevant to the user and associated with the pair of arbitrary time points,
determining version difference data including digital content item changes and comment changes made in the digital content items,
condensing the versions of the digital content items or the version difference data from a current form to a condensed form, and
constructing a prompt for a generative artificial intelligence, AI, model (115a-1) to perform at least one of:
(1) summarizing the comment changes in the condensed form across the digital content items, per digital content item, or per user involvement type in a respective comment,
(2) ranking users making the digital content item changes and the comment changes,
(3) summarizing per user the digital content item changes and the comment changes made by each respective user;
(4) ranking the digital content items based at least on the comment changes in the condensed form, and
(5) ranking at least one of comments in the digital content items or the comment changes in the condensed form based on at least one of an organization hierarchy of the users, a timeline, or deadlines;
applying the prompt to the generative AI model to perform the at least one of (1)-(5) processing, and generate an output including at least one of the ranked users, the summarized comments, the ranked digital content items, the ranked comments, or the ranked comment changes;
providing the output to a client device (120a) associated with the user; and
causing a user interface (305) of the client device to display the output,
wherein the manifest information specifying a configuration of the declarative agent with required fields and capabilities corresponding to the (1)-(5) processing, and a configuration of the plugin with required fields and capabilities corresponding to retrieving the versions.

14. The method of claim 13, wherein the triggering criterion includes a pre-defined monitoring trigger, a pre-defined subscription trigger, or a user interaction with one of the digital content items or an AI agent (105) within the user interface at the client device.

15. The method of any of claim 13 or claim 14, further comprising:
querying a graph database (118c) to determine the organization hierarchy of the users.
